# EUROPEAN PATENT APPLICATION

(11) **EP 4 492 126 A1**
(43) Date of publication of application: **15.01.2025**
(21) Application number: 23767125.0
(22) Date of filing: 07.03.2023
(51) Int. Cl.: G02B 27/64, G02B 7/02, G03B 5/00

(54) **LENS DRIVING DEVICE, AND CAMERA MODULE AND OPTICAL DEVICE INCLUDING SAME**

(30) Priority: 07.03.2022 KR 20220028711
(71) Applicant: LG INNOTEK CO., LTD., Seoul 07796 (KR)
(72) Inventor: NOH, Yun Ho, Seoul 07796 (KR); YOO, Kyoung Ho, Seoul 07796 (KR); SON, Byung Wook, Seoul 07796 (KR)
(74) Representative: DREISS Patentanwälte PartG mbB
(86) International application number: PCT/KR2023/003085
(87) International publication number: WO 2023/172024

(57) **Abstract**

This invention includes a cover member comprising a upper plate and side plates, a bobbin disposed in the cover member, magnet units disposed in the cover member a coil which is disposed on the bobbin and faces the magnet units, a sensing magnet disposed on the bobbin, and a position sensor which is disposed in the cover member and faces the sensing magnet, wherein the magnet units are disposed adjacent to respective edges between side plates of the cover member, and the cover member has a first opening formed on a side plate thereof such that the first opening faces the sensing magnet.

## Description

### [Technical Field]

Embodiments relate to a lens driving device, a camera device and an optical device including the same.

### [Background Art]

It is difficult to apply technology of a voice coil motor (VCM) used in existing general camera modules to a subminiature, low-power camera module, and therefore research related thereto has been actively conducted.

In the case of camera modules mounted on small electronic products such as smartphones, the camera module may frequently receive shock during using it, and the camera module may slightly be shaken due to the user's hand shake during filming. In consideration of this, a technology for installing an anti-shake means in a camera module has recently been developed. For information related to general camera modules, No. 10-2015-0008662 (January 23, 2015) may be referred.

### [Disclosure]

### [Technical Problem]

Embodiments provide a lens driving device, and a camera device and an optical device including the same capable of improving electromagnetic force between a coil and a magnet unit and suppressing magnetic field interference between the sensing magnet and the magnet unit.

### [Technical Solution]

A lens driving device according to an embodiment includes a cover member including an upper plate and a side plate; a bobbin disposed in the cover member; magnet units disposed in the cover member; a coil disposed on the bobbin and facing the magnet units; a sensing magnet disposed on the bobbin; and a position sensor disposed in the cover member so as to face the sensing magnet, wherein each of the magnet units is disposed adjacent to a corresponding one of edges of the side plate of the cover member, and the cover member includes a first opening formed at the side plate and facing the sensing magnet.

The side plate of the cover member may include first to fourth side plates, and the first opening is formed at the first side plate facing the sensing magnet in a direction parallel to a straight line perpendicular to an optical axis and passing through the optical axis.

When the side plate at which the first opening is formed is viewed from a front, the first opening may overlap the sensing magnet. When the first side plate at which the first opening is formed is viewed from a front, the first opening may not overlap the magnet units.

The lens driving device may include a housing disposed in the cover member, and the magnet units may be disposed at corner portions of the housing corresponding to the edges of the side plate of the cover member.

Each of the magnet units may include a first portion exposed from the housing, and the first portion may contact the side plate of the cover member.

Each of the magnet units may include a second portion exposed from the housing and contacting a portion of the side plate exposed from the housing.

The housing may comprises a portion disposed between two neighboring magnet units among the magnet units and facing the side plate.

The lens driving device may include a balancing member disposed on the bobbin so as to be opposite to the sensing magnet with respect to an optical axis, and the side plate of the cover member may include a second opening facing the balancing member. The second opening may be disposed to be opposite to the first opening based on the optical axis.

When the side plate at which the first opening is formed is viewed from a front, the magnet units may overlap the edges of the side plate.

A value obtained by dividing a distance between two magnet units disposed adjacent to the side plate where the first opening is formed by a cross direction length of the first opening may be 2 to 4. A value obtained by dividing a cross direction length of the side plate at which the first opening is formed by a cross direction length of the first opening may be 5 to 7. A value obtained by dividing a lengthwise length of the side plate at which the first opening is formed by a lengthwise length of the first opening may be 1.5 to 2.5.

A lens driving device according to another embodiment includes a cover member including an upper plate and a side plate; a housing disposed in the cover member; a bobbin disposed in the housing; a coil disposed on the bobbin; a magnet unit disposed at corner portions of the housing and facing the coil; a sensing magnet disposed on the bobbin; and a position sensor disposed on the housing and facing the sensing magnet, and the cover member may include a first opening formed in the side plate to face the sensing magnet.

The housing may include an opening exposing the magnet unit, and the magnet unit may contact the inner surface of the side plate of the cover member through the opening of the housing.

When the side plate on which the first opening is formed is viewed from a front, an edge of the side plate of the cover member may overlap the magnet unit.

The lens driving device according to another embodiment may include a balancing member disposed on the bobbin so as to be opposite to the sensor magnet with respect to an optical axis, and the side plate of the cover member has a second opening facing the balancing member.

### [Advantageous Effects]

Embodiments may improve the electromagnetic force between the magnet unit and the coil by using a cover member made of magnetic material.

In Embodiments, at least a portion of the magnet unit contacts the side plate of the cover member made of magnetic material, and thereby the electromagnetic force between the magnet unit and the coil may be improved.

In the embodiments, magnetic field interference between the sensing magnet and the magnet units can be suppressed by forming a first opening corresponding to the sensing magnet in the side plate of the cover member.

Embodiments may suppress magnetic field interference between the sensing magnet and the magnet units, thereby prevent bobbin tilt during AF operation and ensure reliability of AF operation.

### [Description of Drawings]

FIG. 1 is a perspective view of a lens driving device according to an embodiment.
FIG. 2 is a separated perspective view of the lens driving device in FIG. 1.
FIG. 3 is a perspective view of the lens driving device without the cover member in FIG. 1.
FIG. 4A is a perspective view of the bobbin in FIG. 1.

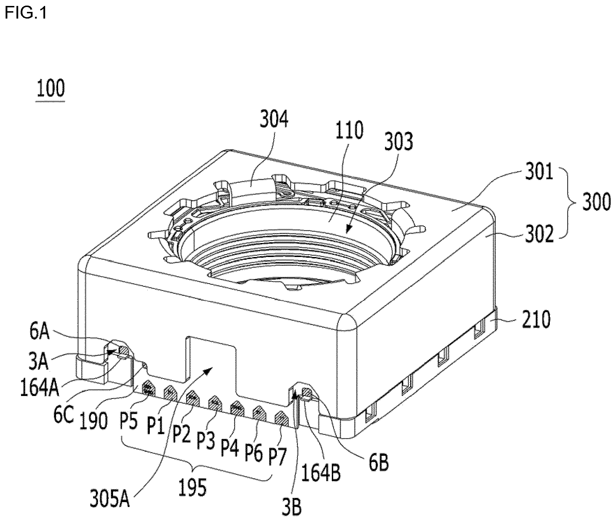

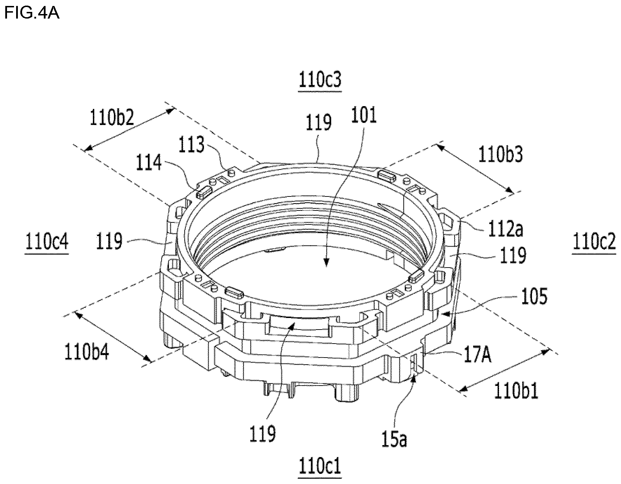

FIG. 4A is a view illustrating the bobbin, the coil, the sensing magnet, and the balancing member in FIG. 1.

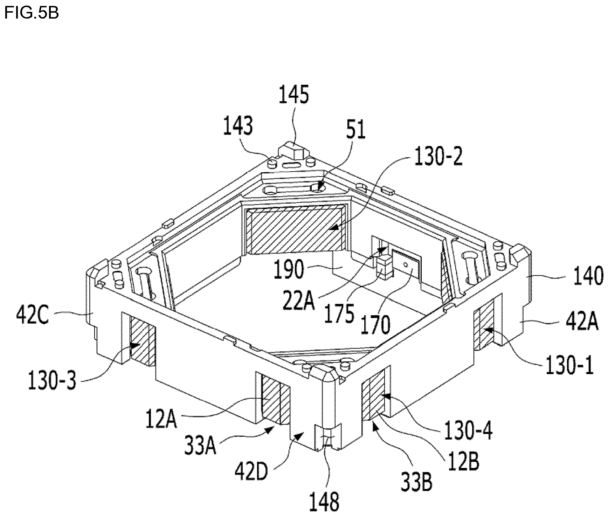

FIG. 5B is a first perspective view of the housing.
FIG. 5B is a first perspective view of the housing, the magnet, the circuit board, the position sensor, and capacitor.

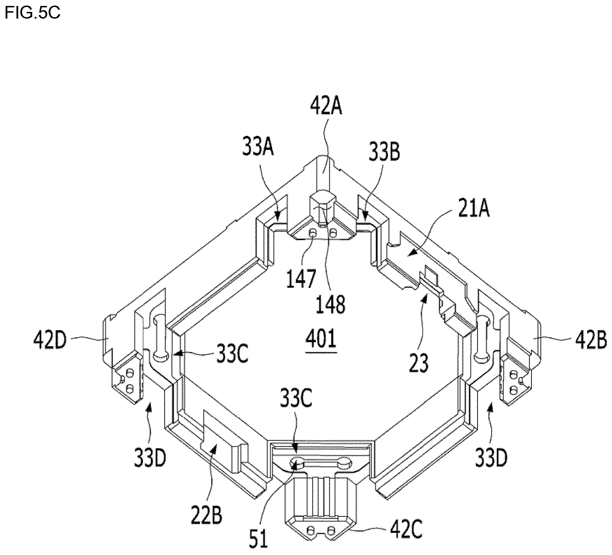

FIG. 5C is a second first perspective view of the housing.

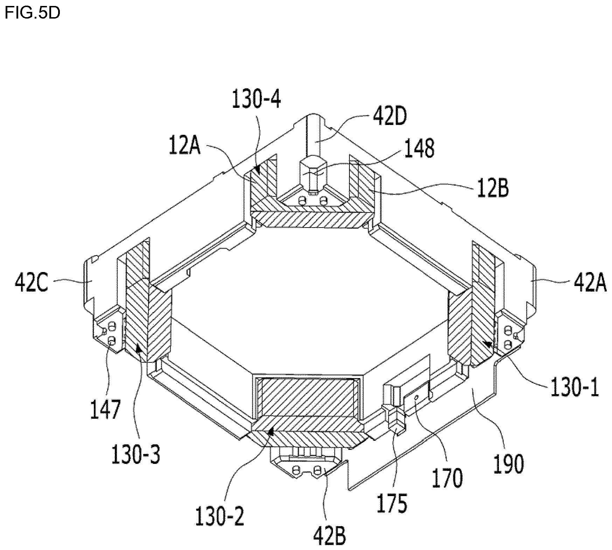

FIG. 5D is a second perspective view of the housing, the magnet, the circuit board, the position sensor, and capacitor.

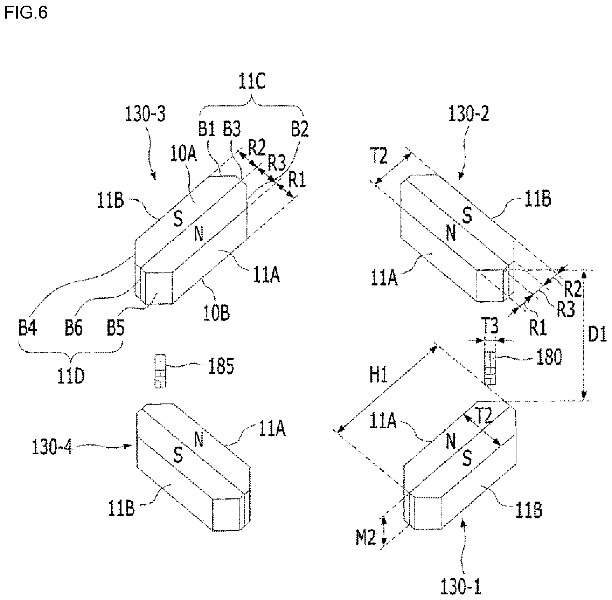

FIG. 6 is a perspective view of the magnet units, the sensing magnet, and the balancing member.

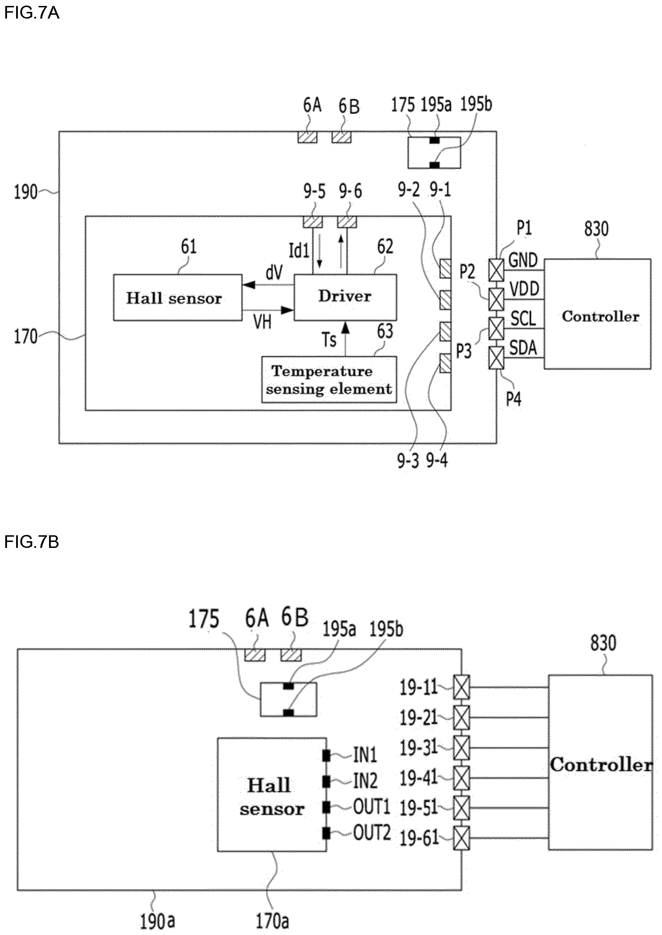

FIG. 7A is a block diagram illustrating an embodiment of the position sensor, the circuit board, and the capacitor.
FIG. 7B is a block diagram illustrating another embodiment of the position sensor, the circuit board, and the capacitor.

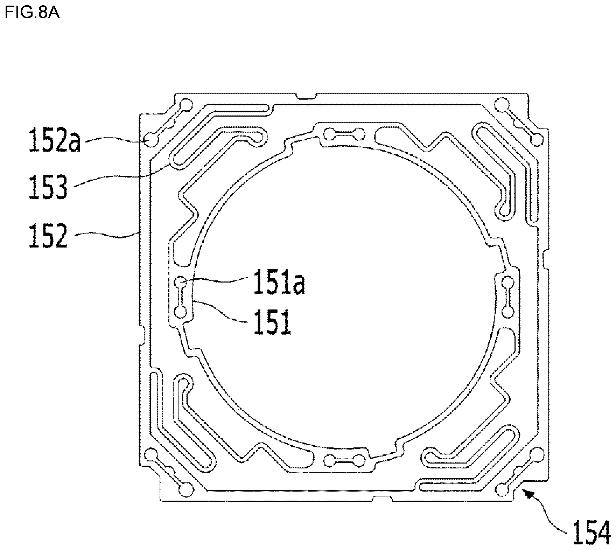

FIG. 8A is a plan view of the upper elastic member.

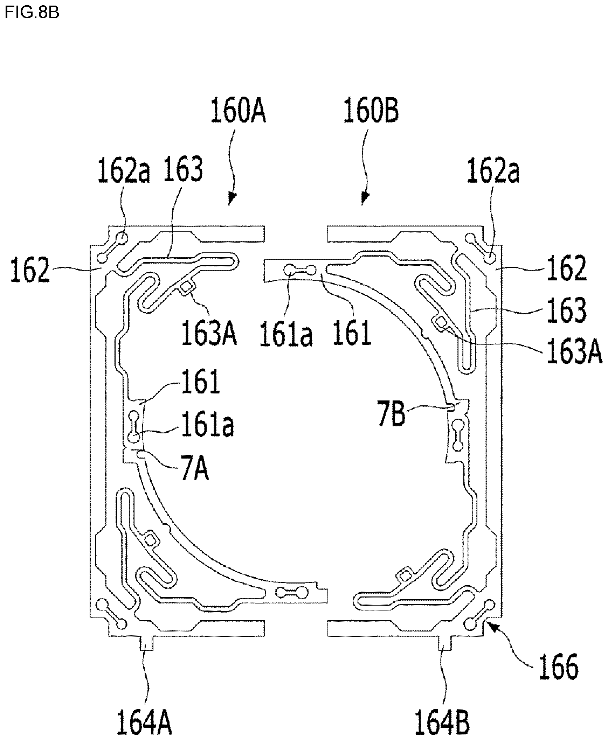

FIG. 8B is a plan view of the lower elastic member.

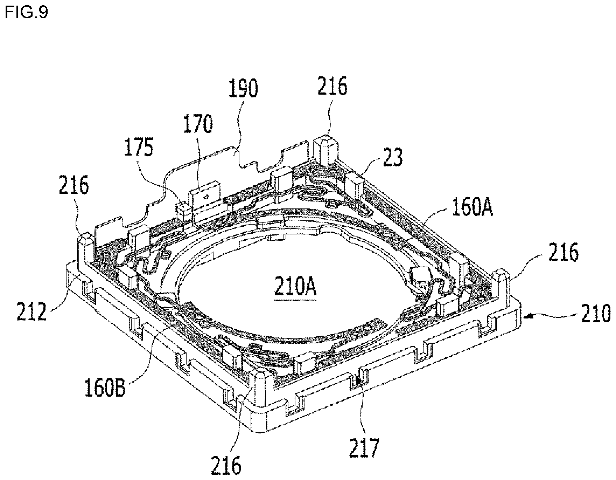

FIG. 9 is a perspective view of the circuit board, the position sensor, the capacitor, first and second lower springs, and the base.

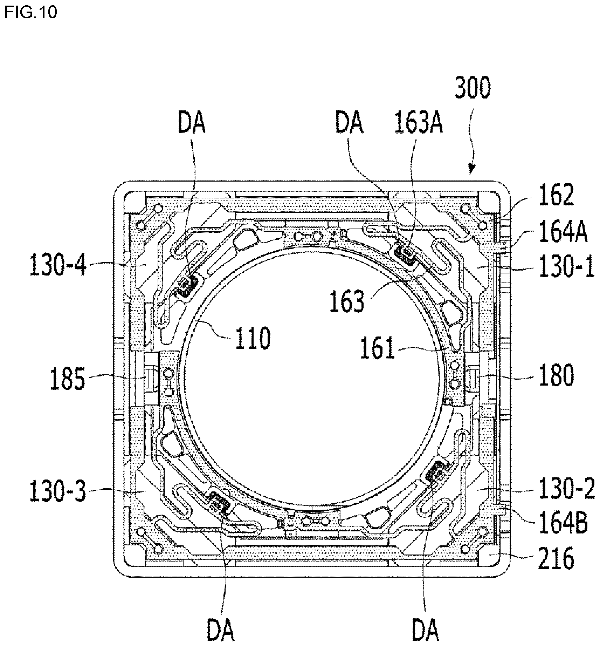

FIG. 10 is a bottom view of the lens driving device without the base.

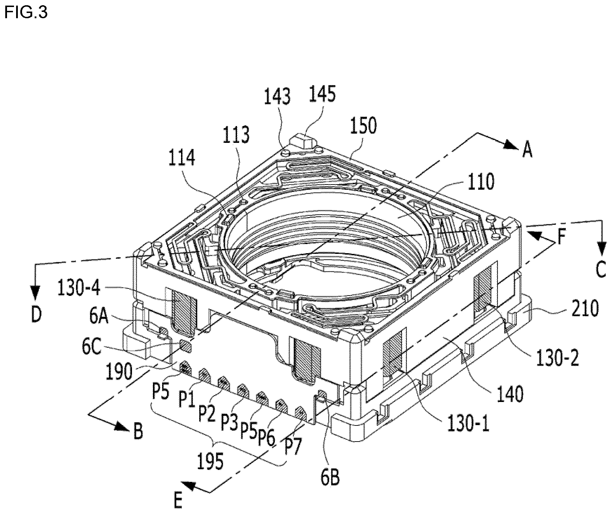

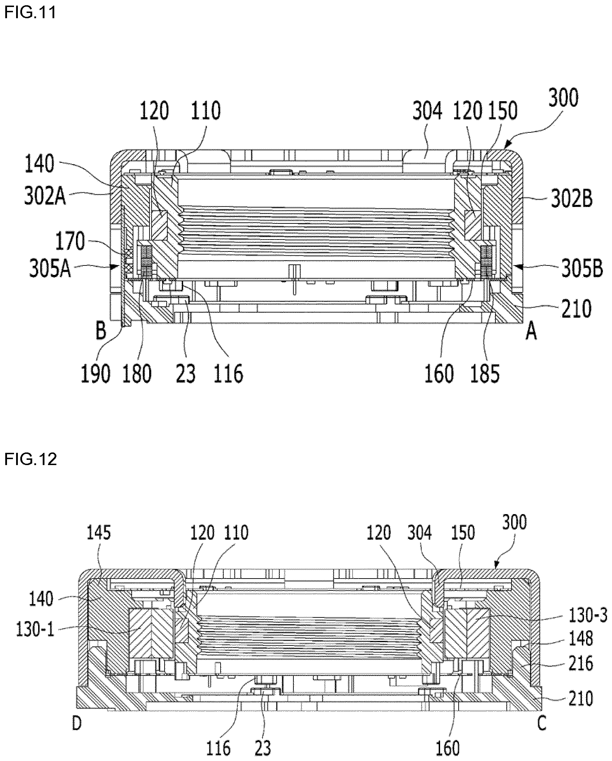

FIG. 11 is a cross-sectional view of the lens driving device taken along line AB in FIG. 3.
FIG. 12 is a cross-sectional view of the lens driving device taken along line CD in FIG. 3.

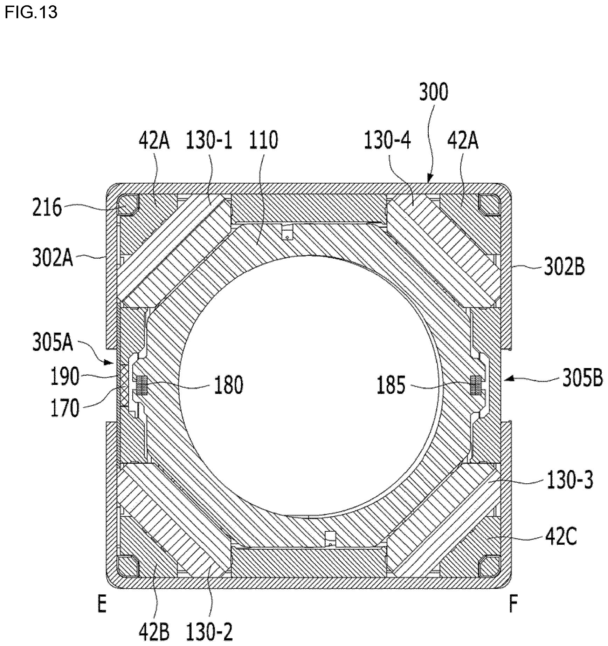

FIG. 13 is a cross-sectional view of the lens driving device taken along line EF in FIG. 3

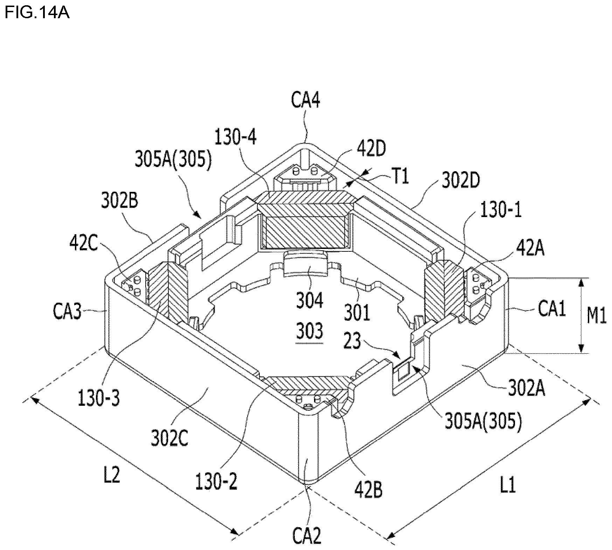

FIG. 14A is a flipped perspective view of the cover member, the housing, and the magnet.

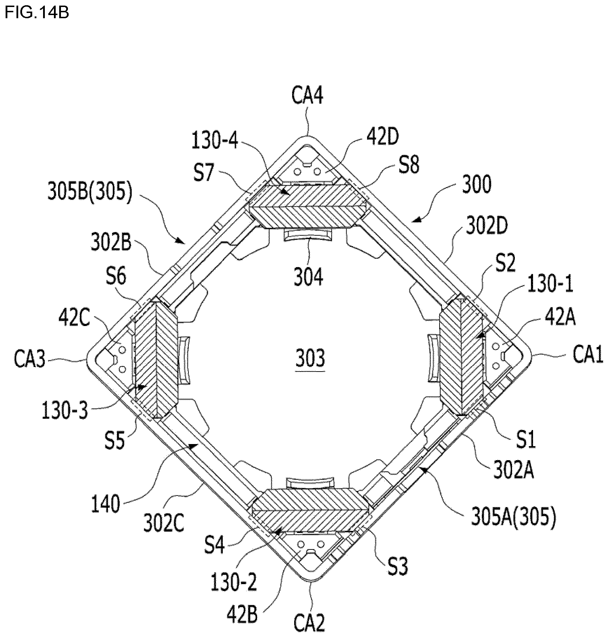

FIG. 14B is a plan view of the cover member, the housing, and the magnet in FIG.14A.

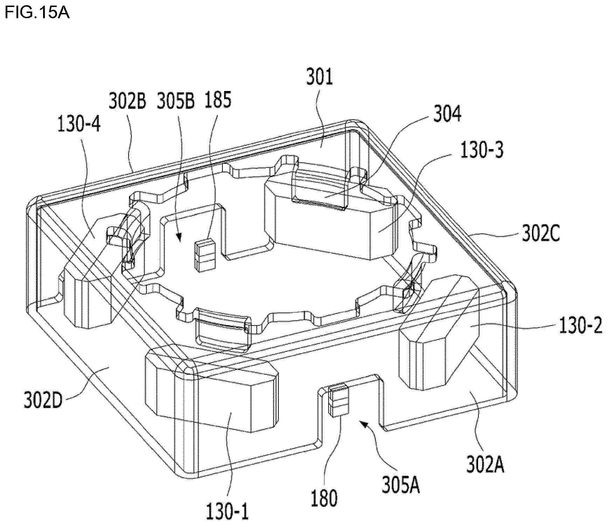

FIG. 15A is a perspective view of the cover member, the magnet, the sensing magnet, and the balancing member.

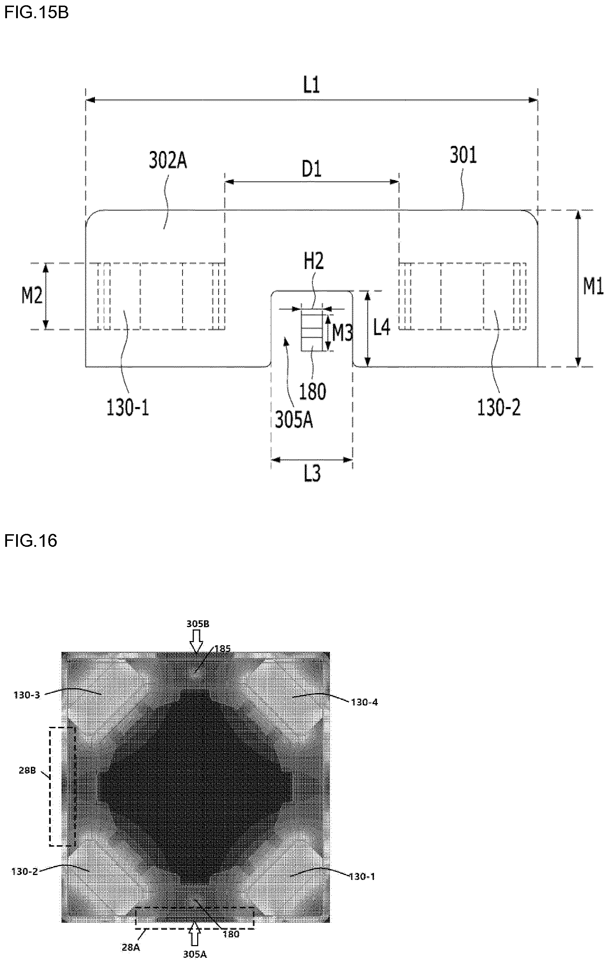

FIG. 15B shows a positional relationship between the cover member, the first and second magnet units, and the sensing magnet.
FIG. 16 shows a magnetic field generated from each of the magnet units, the sensing magnet, and the balancing member.

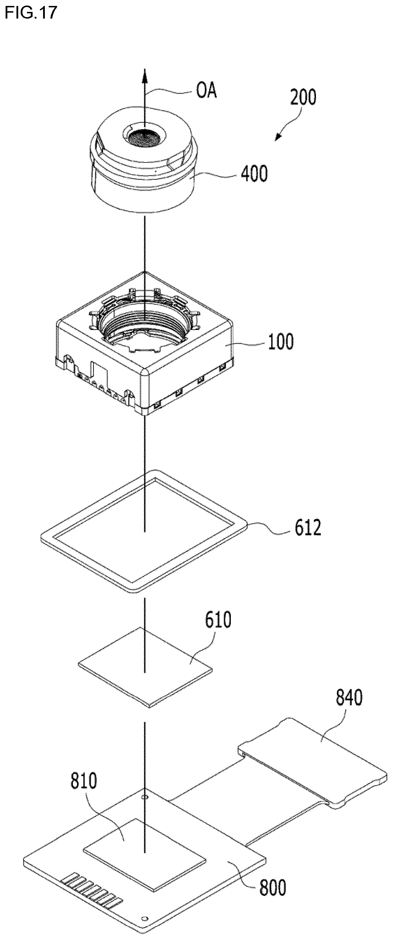

FIG. 17 shows a separated perspective view of the camera device according to an embodiment.

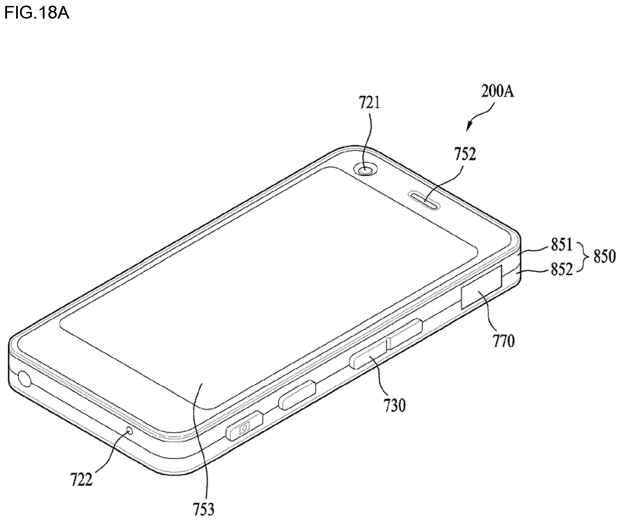

FIG. 18A is a perspective view of an optical device according to an embodiment.

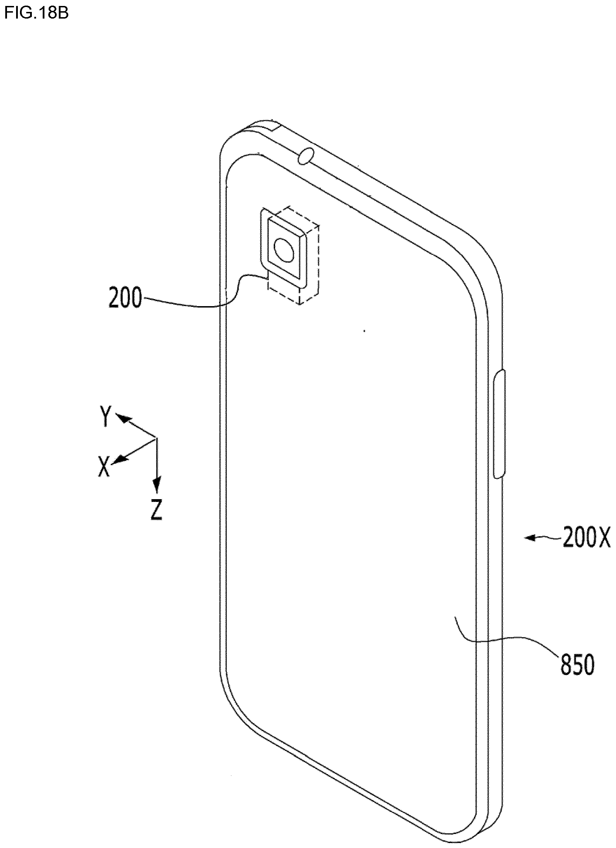

FIG. 18B is a perspective view of an optical device according to another embodiment.

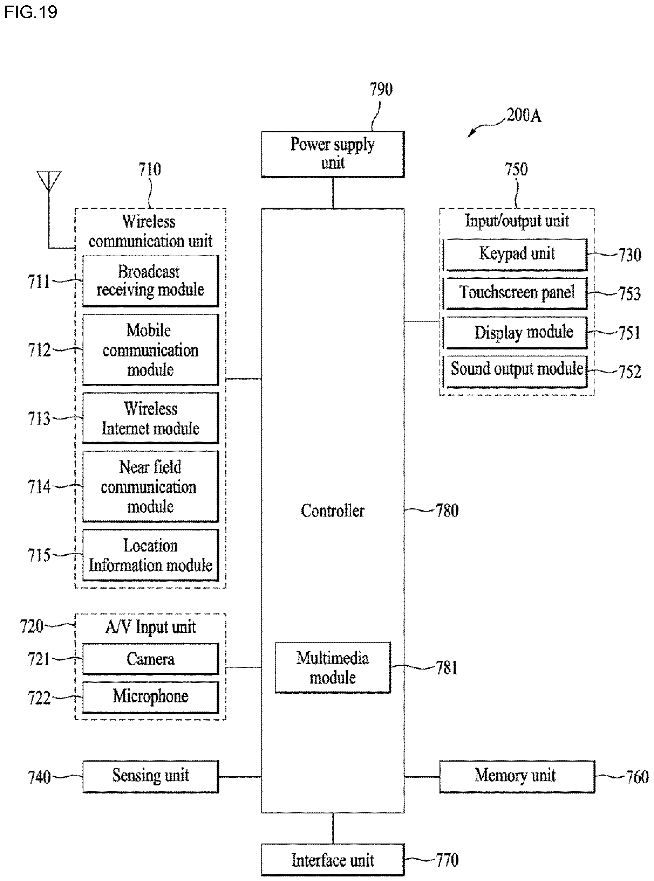

FIG. 19 is a configuration diagram of the optical device shown in FIG. 18A and FIG. 18B.

### [Best Mode]

Reference will now be made in detail to embodiments, examples of which are illustrated in the accompanying drawings.

However, the technical idea of the disclosure is not limited to the embodiments described below but may be embodied in various other forms, and one or more components may be selectively coupled or substituted between embodiments within the scope of the technical idea of the disclosure.

In addition, terms, (including technical and scientific terms) used in embodiments have the same meanings as those commonly understood by a person having ordinary skill in the art to which the disclosure pertains, unless otherwise defined, and it will be further understood that commonly used terms, such as those defined in dictionaries, should be interpreted as having meanings consistent with their meanings in the context of the relevant art.

In addition, the terms used in embodiments are provided to explain embodiments, but are not intended to restrict the disclosure. In this specification, a singular representation may include a plural representation unless otherwise defined, and in the case in which "at least one (or one or more) of A, B, and C" is described, one or more of all combinations constituted by A, B, and C may be included.

Also, in describing the components of the disclosure, terms such as "first," "second," "A," "B," "(a)," and "(b)" may be used. These terms are used only for the purpose of distinguishing one constituent from another, and the terms do not limit the nature, order or sequence of the components.

When one component is said to be "connected," "coupled," or "linked" to another, this may mean not only that the one component is directly connected, coupled, or linked to the other one but also that the one component is "connected," "coupled," or "linked" to the other one via yet another component interposed therebetween. In addition, it will be understood that when an element is referred to as being "on" or "under" another element, it can be directly on/under the element, and one or more intervening elements may also be present. When an element is referred to as being "on" or "under," "under the element" as well as "on the element" can be included based on the element.

Hereinafter, the lens driving apparatus may be referred to as a lens driving unit, a voice coil motor (VCM), an actuator, or a lens moving device. Hereinafter, the term "coil" may be referred to as a coil unit, and the term "elastic member" may be referred to as an elastic unit or a spring.

Also, in the following description, the term "terminal" may be referred to as a pad, an electrode, a conductive layer, or a bonding portion.

For convenience of description, a lens driving apparatus according to an embodiment will be described using a Cartesian coordinate system (x, y, z). However, other different coordinate systems may be used, and the disclosure is not limited thereto. In the drawings, an x-axis direction and a y-axis direction are directions perpendicular to a z-axis direction, which is an optical-axis direction. The z-axis direction, which is the optical-axis direction, may be referred to as a "first direction," the x-axis direction may be referred to as a "second direction," and the y-axis direction may be referred to as a "third direction."

A lens driving apparatus according to an embodiment may perform an "autofocus function." Here, the autofocus function means automatically focusing on a subject to form an image of the subject on the surface of an image sensor.

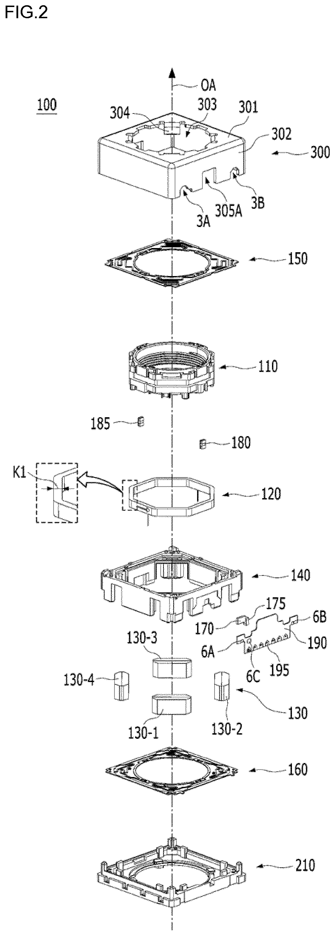

FIG. 1 is a perspective view of a lens driving device 100 according to an embodiment, FIG. 2 is a separated perspective view of the lens driving device 100 in FIG. 1, and FIG. 3 is a perspective view of the lens driving device 100 without the cover member 300 in FIG. 1.

The lens driving device 100 may include a cover member 300, a bobbin 110, a coil 120, a sensing magnet 180, a magnet 130, and a housing 140. The lens driving device 100 may further include a position sensor 170.

The lens driving device 100 may include an elastic member coupled to the bobbin 110 and the housing 140. For example, the elastic member may further include at least one of the upper elastic member 150 and the lower elastic member 160. Additionally, the lens driving device 100 may further include a circuit board 190. Additionally, the lens driving device 100 may further include a balancing member 185. Additionally, the lens driving device 100 may further include a base 210.

First, the bobbin 110 is described.

Bobbin 110 may be disposed within cover member 300. The bobbin 110 may be disposed on the base 210 and spaced apart from the base 210. Also, for example, the bobbin 110 may be disposed inside the housing 140. The bobbin 110 may be moved in the optical axis OA direction or in the first direction (eg, Z-axis direction) by an electromagnetic interaction between the coil 120 and the magnet 130.

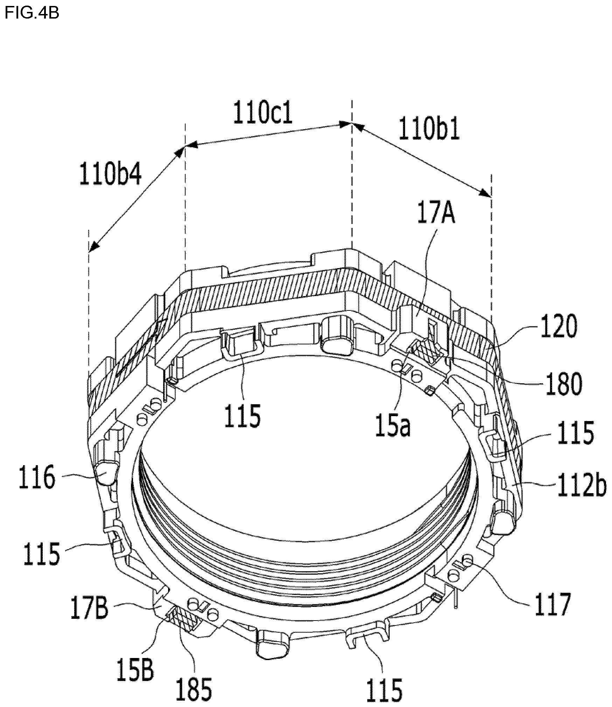

FIG. 4A is a perspective view of the bobbin 110 in FIG. 1, and FIG. 4B is a view illustrating the bobbin 110, the coil 120, the sensing magnet 180, and the balancing member 185 in FIG. 1.

Referring to FIGS. 4A and 4B, a lens or lens barrel may be mounted on the bobbin 110. The bobbin 110 may have an opening 101 for mounting a lens or lens barrel. For example, the opening 101 of the bobbin 110 may be a through hole, and its shape may be circular, oval, or polygonal, but is not limited thereto. A thread for coupling to a lens or lens barrel may be formed on an inner peripheral surface of the bobbin 110. In another embodiment, no thread is formed on the inner peripheral surface of the bobbin 110, and the bobbin 110 may be coupled to the lens or lens barrel using an adhesive.

The bobbin 110 may include a plurality of sides, outer surfaces, or side surfaces.

For example, the bobbin 110 nay include side portions 110b1 to 110b4 corresponding to the side portions 141-1 to 141-4 of the housing 140 and corner portions 110c1 to 110c4 corresponding to corner portions 142-1 to 142- of the housing 140. Each of the corner portions 110c1 to 110c4 of the bobbin 110 may be disposed between two adjacent side portions 110b1 to 110b4 of the bobbin 110.

For example, a first length in the horizontal direction or a cross direction of each of the side portions 110b to 110b4 of the bobbin 110 may be different from a second length in the horizontal direction or the cross direction of each of the corner portions 110c1 to 110c4. For example, the first length may be larger than the second length. Alternatively, the first length may be equal to the second length.

The bobbin 110 may include a first coupling portion 113 coupled to the upper elastic member 150 and a second coupling portion 117 coupled to the lower elastic member 160.

For example, the first coupling portion 113 may be disposed on a upper portion, an upper surface, or an upper end of the bobbin 110, and may be coupled to or fixed to the first inner frame 151 of the upper elastic member 150. The second coupling portion 117 may be disposed on a lower portion, a lower surface, or a lower end of the bobbin 110 and may be coupled to or fixed to the second inner frame 161 of the lower elastic member 160. Each of the first and second coupling portions 113 and 117 may have a protrusion shape, but in another embodiment, each of the first and second coupling portions may have a groove or flat shape.

The bobbin 110 may include a first escape part 112a for avoiding or escaping spatial interference with the first connection portion 153 and a second escape part 112b for avoiding or escaping spatial interference with the second connection portion 163. For example, the first escape part 112a may be formed in an area of an upper surface of the bobbin 110 that corresponds to or overlaps the first connection portion 153 in the optical axis direction, and may be recessed from the upper surface of the bobbin 110. For example, the second escape part 112b may be formed in an area of a lower surface of the bobbin 110 that corresponds to or overlaps the second connection portion 163 in the optical axis direction, and may be recessed from the lower surface of the bobbin 110. For example, each of the first and second escape parts 113 and 117 may have a groove shape.

When the bobbin 110 moves in the first direction, by the first and second escape parts 112a and 112b, spatial interference between the first and second connection portions 153 and 163 and the bobbin 110 can be removed, and as a result, the first connection portion 153 and the second connection portion 163 can be easily elastically deformed.

The bobbin 110 may include a seating portion 105 on which the coil 120 is disposed or seated. For example, the seating portion 105 may be formed on the side surface or the outer surface of the bobbin 110. For example, the seating portion 105 may have a groove shape.

The coil 120 may be disposed or seated in the seating portion 105 of the bobbin 110. For example, the coil 120 may be directly wound or wound around the seating portion 105 of the bobbin 110 so at to rotate clockwise or counterclockwise with respect to the optical axis OA. In another embodiment, the bobbin 110 may not be provided with a seating part for seating the coil, and the coil may be directly wound or fixed to the outer surface of the bobbin 110 without a groove.

Referring to FIG. 4B, the bobbin 110 may include a protrusion 17A and 17B protruding from the outer surface thereof. For example, the protrusions 17A and 17B may be disposed on at least one of the side portions 110b1 to 110b4 of the bobbin 110. For example, the first protrusion 17A may be disposed on the first side portion 110b1 of the side portions 110b1 to 110b4 of the bobbin 110, and the second protrusion 17B may be disposed on the second side portion 110b2 of the side portions 110b1 to 110b4 of the bobbin 110. The second side portion 110b2 may be located on the opposite side of the first side portion 110b1 with respect to the optical axis. For example, the protrusions 17A and 17B may protrude in a direction parallel to a straight line which is perpendicular to the optical axis and passes through the optical axis.

The protrusions 17A and 17B of the bobbin 110 may correspond to or face the grooves 22A and 22B of the housing 140. At least a portion of the protrusions 17A and 17B of the bobbin 110 may be inserted into or disposed within the grooves 22A and 22B of the housing 140, and may suppress or prevent the bobbin 110 from rotating over a certain range around the optical axis.

Additionally, the bobbin 110 may include a first groove 15a for disposing or seating the sensing magnet 180. The first groove 15a may be formed on the outer surface of one side portion of the bobbin 110. For example, the first groove 15a may include an opening that exposes or opens at least a portion of the sensing magnet 180. At this time, the opening may be formed in at least one of the upper surface, a lower side, and the side surface of the bobbin 110.

Additionally, the bobbin 110 may include a second groove 15b for disposing or seating the balancing member 185. For example, the second groove 15b may be formed on the outer surface of the side portion of the bobbin 110 that faces the side portion of the bobbin 110 where the first groove 15a is formed.

For example, the first groove 15a may be formed at the first protrusion 17A of the bobbin 110, and the second groove 15b may be formed at the second protrusion 17B of the bobbin 110.

Referring to FIG. 4A, a guide portion 114 may be formed on the upper surface of the bobbin 110 to guide the installation position of the upper elastic member 150. The guide portion 114 of the bobbin 110 may protrude from the upper surface of the bobbin 110 to guide a path along which a portion of the inner frame of the upper elastic member 150 passes.

At least one recess may be formed on the upper surface of the bobbin 110 and correspond to, face, or overlap at least one protrusion 303 of the cover member 300 in the optical axis direction. For example, at least one groove 119 may be recessed from the upper surface of the bobbin 110. At least a portion of the protrusion 303 of the cover member 300 may be disposed in the groove 119 of the bobbin 110. The groove 119 of the bobbin 110 may function as an upper stopper together with the protrusion 303 of the cover member 300.

For example, in an initial position of the bobbin 110, the protrusion 303 and a bottom of the groove 119 of the bobbin 110 may be spaced apart. The bobbin 110 moves in the optical axis direction, for example, in an upward direction and the bottom of the groove 119 contacts the protrusion 303, so the bobbin 110 cannot move beyond the predetermined range.

The bobbin 110 may include a stopper 116. The stopper 116 may protrude downward from the lower surface of the bobbin 110. When the bobbin 110 moves in the first direction for auto focusing, even if the bobbin 110 moves beyond the predetermined range due to an external impact, etc., the stopper 116 of the bobbin 110 may serve to prevent the lower surface of the bobbin 110 except the stopper 116 from directly colliding with the base 210.

The bobbin 110 may include a protruding portion 115 for contacting the damper DA connected to the second connection portion 163 of the lower elastic member 160, which will be described later. The protruding portion 115 may protrude from the lower surface of the bobbin 110. The protruding portion 115 is for contact with the damper DA and can be expressed as a guide part or a protrusion instead. For example, a groove may be formed in the protruding portion 115, and at least a portion of the damper DA may be disposed in the groove of the protruding portion 115, and may be in contact with or attached to the groove of the protruding portion 115.

Next, the coil 120 will be described.

The coil 120 may be disposed on or coupled to bobbin 110. For example, the coil 120 may be disposed on the outer surface of the bobbin 110. For example, the coil 120 may be disposed in or wound on the seating portion 105 of the bobbin 110.

The coil 120 may be disposed on the bobbin 110 to have a closed loop shape, for example, a ring shape. For example, the coil 120 may have a ring shape wound clockwise or counterclockwise about the optical axis, and may be wound or disposed on the outer surface of the bobbin 110.

In another embodiment, the coil 120 may be implemented in the form of a coil ring wound or arranged in a clockwise or counterclockwise direction about an axis perpendicular to the optical axis, and the number of coil rings may be the same as the number of magnets 130. However, it is not limited to this.

The coil 120 may be a driving coil that interacts electromagnetically with the magnet 130. A driving signal (eg, driving current or voltage) may be applied to the coil 120 to generate electromagnetic force by interaction with the magnet 130. The driving signal applied to the coil 120 may be a direct current signal, but is not limited thereto, and may be an alternating current signal or include a direct current signal and an alternating current signal.

The AF moving unit may move in a first direction, for example, upward (+Z-axis direction) or downward (-Z-axis direction), by electromagnetic force resulting from the interaction between the coil 120 and the magnet 130.

By controlling the strength or/and polarity (e.g., direction in which current flows) of the driving signal applied to the coil 120, the strength or/and direction of electromagnetic force due to the interaction between the coil 120 and the magnet 130 can be controlled, and the movement of the AF moving unit in the first direction can be controlled, and thus an auto-focusing function can be performed.

The AF moving unit may be unidirectionally driven or bidirectionally driven by electromagnetic force resulting from the interaction between the coil 120 and the magnet 130. Here, unidirectional driving refers to moving the AF moving unit in one direction, for example, in the upward direction (e.g., upward direction (+Z-axis direction)) based on the initial position of the AF moving unit, and bidirectional driving refers to moving the AF moving unit in both directions (e.g., upward or downward) based on the initial position of the AF moving unit.

For example, the initial position of the bobbin 110 may be an initial position of the AF moving unit (eg, the bobbin) in a state where power or a driving signal is not applied to the coil 120. Or, for example, the initial position of the bobbin 110 may be a position where the AF moving unit is located as the result of the upper elastic member 150 and the lower elastic member 160 being elastically deformed due only to the weight of the AF moving unit.

In addition, the initial position of the bobbin 110 may be the position at which the AF moving unit is placed when gravity acts in a direction from the bobbin 110 to the base 210, or, when gravity acts in a direction from the base 210 to the bobbin 110.

The AF moving unit may be the bobbin 110 elastically supported by the upper elastic member 150 and the lower elastic member 160. Alternatively, the AF moving unit may further include components that are mounted on the bobbin 110 and move together with the bobbin 110. For example, the AF moving unit may include the bobbin 110, the coil 120, the sensing magnet 180, and the balancing member 185, and may also include a lens or lens barrel when they are mounted.

The coil 120 may be conductively connected to at least one of the upper elastic member 150 or the lower elastic member 160. Additionally, the coil 120 may be conductively connected to the circuit board 190 through at least one of the upper elastic member 150 or the lower elastic member 160. For example, by solder or conductive adhesive, the coil 120 may be coupled to or conductively connected to two of the upper springs of the upper elastic member 150, or to two of the lower springs of the lower elastic member.

For example, the coil 120 disposed on the bobbin 110 in the initial position may correspond to, face, or overlap the magnet 130 in a direction parallel to a straight line perpendicular to the optical axis and passing through the optical axis.

Next, the sensing magnet 180 and the balancing member 185 will be described.

The sensing magnet 180 may serve to provide a magnetic field for detection by the position sensor 170. The magnet 130 may be expressed as a "first magnet", and the sensing magnet 180 may be expressed as a "second magnet".

The balancing member 185 can prevent the bobbin 110 from being tilted by the sensing magnet 180 during AF operation by balancing its weight with the sensing magnet 180, thereby the reliability of the AF operation can be ensured. For example, the balancing member 185 may be a magnetic material. For example, the balancing member 185 may be a magnetic metal member or a magnet. Alternatively, the balancing member 185 may be a non-magnetic material. For example, the balancing member 185 may include non-magnetic metal or injection material.

When the balancing member 185 is a magnetic material, the influence of the magnetic field of the sensing magnet 180 on the coil 120 can be offset, thereby the reliability of AF operation can be improved.

The sensing magnet 180 may be disposed on or coupled to the bobbin 110.

For example, the sensing magnet 180 may be disposed in the first groove 15a of the bobbin 110, and may be disposed to correspond to, face, or overlap the position sensor 170 in a direction perpendicular to the optical axis and passing through the optical axis.

For example, the sensing magnet 180 may be positioned lower than the coil 120. Additionally, the balancing member 185 may be positioned lower than the coil 120. For example, an upper surface of the sensing magnet 180 may be positioned lower than the coil 120, and a lower surface of the balancing member 185 may be positioned lower than the coil 120.

For example, a portion of one surface of the sensing magnet 180 facing the position sensor 170 may be exposed from the opening of the first groove 15a. In another embodiment, a portion of one surface of the sensing magnet 180 facing the position sensor 170 may not be exposed from the first groove 15a.

For example, the sensing magnet 180 may be a unipolar magnetized magnet including single N pole and single S pole. In another embodiment, the sensing magnet 180 may be a bipolar magnetized magnet or a four-pole magnet including two N poles and two S poles.

The sensing magnet 180 can move in the optical axis direction together with the bobbin 110. And the position sensor 170 can detect the magnetic field strength or magnetic force of the sensing magnet 180 which moves in the optical axis direction, and output an output signal according to the detected result.

For example, the magnetic field strength or magnetic force of the sensing magnet 180 detected by the position sensor 170 may be changed depending on a displacement of the bobbin 110 in the optical axis direction, and the position sensor 170 can output the output signal proportional to the strength of the detected magnetic field, and the displacement of the bobbin 110 in the optical axis direction can be detected using the output signal of the position sensor 170. For example, the position sensor 170 may detect the position of the bobbin 110 or the position of the sensing magnet 180 in the optical axis direction.

The balancing member 185 may have a weight to balance the weight of the sensing magnet 180. For example, the balancing member 185 may have the same weight as the sensing magnet 180. The balancing member 185 may be alternatively expressed as "balancing magnet" or "third magnet."

Next, the housing 140 will be described.

The housing 140 may be disposed on base 210. The housing 140 may be disposed inside the cover member 300. The housing 140 can accommodate the bobbin 110 inside.

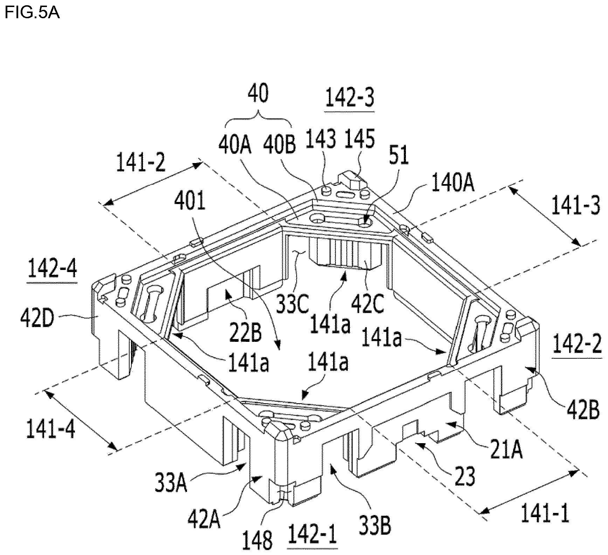

FIG. 5A is a first perspective view of the housing 140, and FIG. 5B is a first perspective view of the housing 140, the magnet 130, the circuit board 190, the position sensor 170, and the capacitor 175. FIG. 5C is a second perspective view of the housing 140, and FIG. 5D is a second perspective view of the housing 140, the magnet 130, the circuit board 190, the position sensor 170, and the capacitor 175.

Referring to FIGS. 5A to 5D, the housing 140 supports the magnet 130 and accommodates the bobbin 110 inside so that the AF moving unit, for example, the bobbin 110 can move in the direction of the optical axis.

The housing 140 may have an overall hollow column shape. For example, the housing 140 may include an opening 401 to accommodate the bobbin. The opening 401 of the housing 140 may have a polygonal (eg, square or octagonal) or circular shape. For example, the opening 401 of the housing 140 may be in the form of a through hole that penetrates the housing 140 in the optical axis direction.

The housing 140 may include a plurality of side portions (eg, 141-1 to 141-4) and a plurality of corner portions (eg, 142-1 to 142-4). For example, the housing 140 includes the first side portion 141-1 and the second side portion 141-2 which are opposite to each other with respect to the optical axis, and the third side portion 141-3 and the fourth side portion 141-4 which are disposed between the first and second side portions 141-1 and 141-2 and opposite to each other with respect to the optical axis.

For example, the housing 140 includes the first corner portion 142-1 located between the first side portion 141-1 and the fourth side portion 141-4, the second corner portion 142-2 located between the first and third side portions 141-1 and 141-3, the third corner portion 142-3 located between the second and third side portion 141-2 and 141-3, and the fourth corner portion 142-4 located between the second and fourth side portion 141-2 and 141-4.

Each of the first to fourth side portions 141-1 to 141-4 of the housing 140 may correspond to, face or overlap any one of the first to fourth side plates 302A to 320D of the cover member 300. In addition, each of the first to fourth side portions 141-1 to 141-4 of the housing 140 is parallel to a corresponding one of the first to fourth side plates 302A to 320D of the cover member 300.

Each of the first to fourth side portions 141-1 to 141-4 of the housing 140 may correspond to one of the first to fourth side portions 110b1 to 110b4 of the bobbin 110, and each of the first to fourth corner portions 142-1 to 142-4 of the housing 140 may correspond to one of the first to fourth corner portions 110c1 to 110c4 of the bobbin 110.

The corner portions 142-1 to 142-4 of the housing 140 may include post parts 42A to 42D, respectively. Each of the post parts 42A to 42D may include an corner of the housing 140 corresponding to an corner of the side plate 302 of the cover member 300.

The housing 140 may include a seating portion 141a (or a receiving portion) for mounting or disposing the magnet 130.

For example, the seating portion 141a for disposing or seating the magnet 130 may be formed in at least one of the corner portions 142-1 to 142-4 of the housing 140.

The seating portion 141a may be provided at a lower portion or a lower end of at least one of the corner portions 142-1 to 142-4 of the housing 140. The seating portion 141a of the housing 140 may be formed as a recess having a shape corresponding to that of the magnet 130, for example, a concave groove. In another embodiment, the seating portion of the housing 140 may be in the form of a hole or through hole.

Referring to FIGS. 5B and 5C, the housing 140 may include openings 33A, 33B, 33C, and 33D to expose at least a portion of the magnet 130.

For example, the housing 140 may include a first opening 33A for exposing or opening a first portion 12A of the magnet 130. Also, for example, the housing 140 may include a second opening 33B for exposing or opening a second portion 12B of the magnet 130. The housing 140 may include a third opening 33C for opening or exposing at least a portion of a first side surface 11A of the magnet 130. The housing 140 may include a fourth opening 33D exposing at least a portion of a lower surface 10B of the magnet 130.

For example, the first opening 33A may be located on one side of the post parts 42A to 42D of the housing 140, and the second opening 33B may be located on another side of the post parts 42A to 42D of the housing 140. For example, the post parts 42A to 42D may be located between the first opening 33A and the second opening 33B of the housing 140.

In another embodiment, the housing 140 may include at least one of the first to fourth openings 33A to 33D.

For example, the seating portion 141a of the housing 140 may include the first opening 33A and the second opening 33B described above. For example, the seating portion 141a may include at least one of the third and fourth openings 33C and 33D.

The housing 140 may include a stopper 145. The stopper 143 may be formed at an upper portion, an upper surface, or an upper end of the housing 140. For example, the stopper 143 may protrude from the upper surface 140A of the housing 140 toward an inner surface of the upper plate 301 of the cover member 300.

For example, the stopper 145 can prevent the upper portion or the upper surface 140A of the housing 140 from directly colliding with the inner surface of the upper plate 301 of the cover member 300 due to an external impact. Here, the stopper 145 may be expressed as a "boss" or "protrusion" instead.

The housing 140 may include a first coupling portion 143 coupled to the upper elastic member 150 and a second coupling portion 147 coupled to the lower elastic member 160.

For example, the first coupling portion 143 may be formed at the upper portion, the upper surface, or the upper end of the housing 140, and the second coupling portion 147 may be formed at the lower portion, the lower surface, or the lower end of the housing 140. Each of the first and second coupling portions 143 and 147 may have a protrusion shape, but in other embodiments, they may have a recess or a flat shape.

For example, the first coupling portion 143 may be coupled to the first outer frame 152 of the upper elastic member 150, and the second coupling portion 147 may be coupled to the second outer frame 162 of the lower elastic member 150.

For example, the first coupling portion 143 may be disposed on at least one of the side portions 141-1 to 141-4 and the corner portions 142-1 to 142-4 of the housing 140. For example, the second coupling portion 147 may be disposed on at least one of the side portions 141-1 to 141-4 and the corner portions 142-1 to 142-4 of the housing 140.

The housing 140 may include recess portions 22A and 22B that correspond to or face the protrusions 17A and 17B of the bobbin 110. For example, the housing 140 includes a first recess portion 22A corresponding to or facing the first protrusion 17A of the bobbin 110 and a second recess portion corresponding to or facing the second protrusion 17B of the bobbin 110.

For example, the first recess portion 22A may be disposed on an inner surface of the first side portion 141-1 of the housing 140, and the second recess portion 22B may be disposed on the second side portion 141-2 of the housing 140.

The housing 140 may include a recess 148 that corresponds to, face, or overlaps the protrusion 216 of the base 210 in the optical axis direction. The recess 148 may also be expressed as a guide recess. The recess 148 may be formed at the lower portion, the lower surface, or the lower end of at least one of the corner portions 142-1 to 142-4 of the housing 140. For example, the recess 148 may be formed at a lower portion, a lower surface, or a lower end of the post parts 42A to 42D of the housing 140.

For example, the recess 148 of the housing 140 and the protrusion 216 of the base 210 may be coupled to each other by an adhesive member, and the housing 140 may be coupled to the base 210.

The housing 140 may include a recess 40 to avoid spatial interference with the first connection portion 153 of the upper elastic member 150. The recess 40 may be formed on the upper portion, the upper surface, or the upper end of the housing 140. For example, the recess 40 may be recessed from the upper surface 140A of the housing 140 and may include a bottom surface 40A and a side wall 40B. For example, the recess 40 may be formed at the upper surface 140A of the corner portions 142-1 to 142-4 of the housing 140.

The housing 140 may include a hole 51 for injecting adhesive. For example, the hole 51 may be a through hole that penetrates the housing 140. For example, the hole 51 may be formed at the corner portions 142-1 to 142-4 of the housing 140. For example, the hole 51 may be a through hole penetrating the corner portions 142-1 to 142-4 of the housing 140. For example, the hole 51 may be connected or communicated with the seating groove 141a of the housing 140 and may expose at least a portion of the magnet 130 (for example, at least a portion of the upper surface of the magnet 130) . When viewed from above, the hole 51 may have a dumbbell shape, but in other embodiments, it may have a circular or polygonal shape.

For example, the hole 51 may be formed in the bottom surface 40B of the recess 40 of the housing 140 and may penetrate the bottom surface 40B of the recess 40.

The housing 140 may include a structure for being coupled to the circuit board 190, for example, a recess or a protrusion. For example, the housing 140 may include a mounting groove (or groove) 21A for accommodating at least a portion of the circuit board 190. For example, the mounting groove 21A may be formed on the first side portion 141-1 of the housing 140. For example, the mounting groove 21A may be formed on the outer surface of the first side portion 141-1 of the housing 140. The circuit board 190 may be coupled to or fixed to the housing 140 by an adhesive. For example, the circuit board 190 may be attached to the first side portion 141-1 (eg, the mounting groove 21A) of the housing 140 using an adhesive.

The housing 140 may include an opening 23 (or an escape portion) to avoid spatial interference with the position sensor 170 and the capacitor 175 disposed or mounted on the circuit board 190. For example, the opening 23 may be formed at the first side portion 141-1 of the housing 140. For example, the opening 23 may be open to the inner and outer surfaces of the first side portion 141-1 of the housing 140. For example, the opening 23 may be in the form of a hole penetrating the first side portion 141-1 of the housing 140. In another embodiment, the opening 23 may be in the form of a recess.

Next, the magnet 130 will be described.

The magnet 130 may be disposed in the housing 140 or may be combined with the housing 140. The magnet 130 can generate electromagnetic force by an interaction with the coil 120, and may be a driving magnet that can move the bobbin 110 by the electromagnetic force.

The magnet 130 may include a plurality of magnet units 130-1 to 130-4. For example, each of the magnet units 130-1 to 130-4 may be disposed at or coupled to a corresponding one of the corner portions 142-1 to 142-4 of the housing 140. In another embodiment, the magnet units may be disposed on the side portions 141-1 to 141-4 of the housing 140.

For example, each of the magnet units 130-1 to 130-4 is disposed in the seating portion 141a of a corresponding one of the first to fourth corner portions 141-2 to 142-4 of the housing 140.

The magnet 130 may be disposed at a corner of the cover member 300. For example, the magnet 130 may be disposed to correspond to, face, or overlap the corner of the side plate 302 of the cover member 300.

For example, the magnet 130 may be arranged so that at least a portion of the magnet 130 overlaps the corner of the cover member 300 in the diagonal direction. For example, the magnet 130 may be arranged so that at least a portion of the magnet 130 overlaps the corner of the side plate 302 of the cover member 300 in the diagonal direction. At this time, the diagonal direction may be a direction perpendicular to the optical axis and from the corner of the cover member 300 toward the optical axis.

For example, each of the magnet units 130-1 to 130-4 may be disposed at one of the corresponding corners of the cover member 300. For example, each of the magnet units 130-1 to 130-4 may be disposed adjacent to one of the corresponding corners of the side plate 302 of the cover member 300.

In another embodiment, each of the magnet units 130-1 to 130-4 may be disposed to correspond to, face, or overlap one of the side plates 302A to 302D of the cover member 300.

At the initial position of the AF moving unit, at least a portion of the magnet 130(130-1 to 130-4) may overlap the coil 120 in a direction parallel to a straight line perpendicular to the optical axis OA and passing through the optical axis OA.

For example, the magnet 130 may have a polyhedral shape that is easy to be disposed or seated on the corner portions 142-1 to 142-4 of the housing 140.

FIG. 6 is a perspective view of the magnet units 130-1 to 130-4, the sensing magnet 180, and the balancing member 185.

Referring to FIG. 6, the description of one magnet unit (eg, 130-3) may be equally applied or inferred to the remaining magnet units 130-1, 130-2, and 130-4. In addition, the first magnet unit, the second magnet unit, the third magnet unit, and the fourth magnet unit defined in FIG. 6 are examples, and in another embodiment, one of the four magnet units 130-1 to 130 in FIG. 6 may be "first magnet unit", and another one of the four magnet units 130-1 to 130-4 may be "second magnet unit", another one of the four magnet units 130-1 to 130-4 may be "third magnet unit," and the remaining one of the four magnet units 130-1 to 130-4 may be "fourth magnet unit."

For example, the magnet unit (e.g., 130-3) includes a first side surface 11A facing an outer side surface of the coil 120 or the bobbin 110, and a second side surface 11B located on opposite side of the first side surface 11A, a third side surface 11C connecting one end of the first side surface 11A and one end of the second side surface 11B, and a fourth side surface 11D connecting the other end of the first side surface 11A and the other end of the second side surface 11B. Also, for example, the magnet unit (e.g., 130-2) includes an upper surface 10A located on the first to fourth side surfaces 11 A to 11D and a lower surface 10B located below the first to fourth side surfaces 11A to 11D and located on the opposite side of the upper surface 10A.

For example, an area of the first side surface 11A of the magnet unit (eg, 130-3) may be larger than or equal to an area of the second side surface 11B. For example, a cross direction length of the first side surface 11A of the magnet unit (eg, 130-3) may be greater than or equal to a cross direction length of the second side surface 11B.

For example, the magnet unit (eg, 130-3) may include a first portion R1, and a cross direction length of the first portion R1 gradually increases in a direction from the first side surface 11A toward the second side surface 11B. Additionally, the magnet unit (eg, 130-3) may include a second portion R2, and a cross direction length of the second portion R2 decreases in the direction from the first side surface 11A toward the second side surface 11B.

For example, the first portion R1 may have one of the first polarity and the second polarity, and the second portion R2 may have the other polarity of the first polarity and the second polarity. For example, the first polarity may be the N pole, and the second polarity may be the S pole.

Additionally, the magnet unit (eg, 130-3) may include a third portion R3, and a cross direction length of the third portion R3 is constant in the direction from the first side surface 11A toward the second side surface 11B. For example, the cross direction of the magnet unit (eg, 130-3) may be parallel to a cross direction of the first side surface 11A of the magnet unit (eg, 130-2) .

For example, the third part R3 is a first region that is in contact with the first portion R1 and has the same polarity as the first portion R1, and a second region that is in contact with the second portion R2 and has the same polarity as the second portion R2.

For example, the first portion R1 may include the first side surface 11A, and the second portion R2 may include the second side surface 11B. For example, the third portion R2 may be disposed between the first portion R1 and the second portion R2. One side of the third portion R2 may be connected to the first portion R1, and the other side of the third portion R2 may be connected to the second portion R2.

For example, the magnet unit (eg, 130-3) may be left and right symmetrical with respect to a boundary surface between the N and S poles. In another embodiment, the magnet unit (eg, 130-3) may be left and right asymmetric with respect to the boundary surface between the N and S poles.

In another embodiment, the third portion R2 may be omitted, and the first portion R1 may be connected to the second portion R2. In another embodiment, at least one of the first portion R1 and the third portion R3 may be omitted, and the remaining part may be implemented to include the N pole and the S pole.

For example, the third side surface 11C may include a first surface B1 connected to or in contact with the second side surface 11B and a second surface B2 connected to or in contact with the first side surface 11A. Additionally, the third side surface 11C may include a third surface B3 located between the first surface B1 and the second surface B2 and connecting the first surface B1 and the second surface B2.

For example, the fourth side 11D may include a fourth surface B4 connected to or in contact with the second side surface 11B, and a fifth surface B5 connected to or in contact with the first side surface 11A. Additionally, the fourth side surface 11D may include a sixth surface B6 located between the fourth surface B4 and the fifth surface B5 and connecting the fourth surface B4 and the fifth surface B5. In another embodiment, at least one of the third surface B3 and the sixth surface B6 may be omitted.

Referring to FIG. 6, the first portion R1 of the first magnet unit 130-1 and the first portion R1 of the second magnet unit 130-2 may face or overlap the sensing magnet 180 in a direction from the first corner portion 142-1 of the housing 140 toward the second corner portion 142-2 of the housing 140.

For example, the second surface B2 (or the fifth surface B5) of the first magnet unit 130-1 and the second surface B2 (or the fifth surface B5) of the second magnet unit 130-2 may face or overlap the sensing magnet 180 in the direction from the first corner portion 142-1 of the housing 140 toward the second corner portion 142-2 of the housing 140.

The second surface B2 (or the fifth surface B5) of the third magnet unit 130-3 and the second surface B2 (or fifth surface B5) of the fourth magnet unit 130-4 may face or overlap the balancing member 185 in a direction from the third corner portion 142-3 of the housing 140 toward the second corner portion 142-4 of the housing 140.

Each of the magnet units 130-1 to 130-4 may be composed of one body and may be a monopolar magnetized magnet including a single N pole and a single S pole. For example, the first surface 11A of each of the magnet units 130-1 to 130-4 may be any one of S pole and N pole, and the second surface 11B of each of the magnet units 130-1 to 130-4 may be the other one of the S pole and the N pole.

In another embodiment, each of the magnet units 130-1 to 130-4 may be a bipolar magnetization magnet or a quadrupole magnet including two N poles and two S poles. When the first to fourth magnet units 130-1 to 130-4 are bipolar magnetized, each of the first to fourth magnet units 130-1 to 130-4 includes a first magnet portion, a second magnet, and a partition wall disposed between the first magnet portion and the second magnet portion. The first magnet portion may include an N pole, an S pole, and a first boundary surface between the N pole and the S pole. At this time, the first boundary surface is a portion having substantially no magnetism and may include a section having little polarity, and may be a portion that is naturally generated to form a magnet consisting of one N pole and one S pole. The second magnet portion may include an N pole, an S pole, and a second boundary surface between the N pole and the S pole. At this time, the second boundary surface is a portion having substantially no magnetism, and may include a section having little polarity, and may be a portion that is naturally generated to form a magnet consisting of one N pole and one S pole.

The partition wall may be a portion that separates or isolates the first magnet portion and the second magnet portion from each other, and that has substantially no magnetism and may be a portion having little polarity. For example, the partition wall may be a non-magnetic material, air, etc. The partition wall may be expressed as a "Neutral Zone" or "Neutral region". The partition wall is a portion that is artificially formed when the first and second magnet units are magnetized, and a width of the partition wall may be larger than a width of each of the first and second boundary surfaces. Here, the width of the partition wall may be a length of the partition wall in a direction from the first magnet portion to the second magnet portion.

For example, when viewed from above, a planar shape of each of the magnet units 130-1 to 130-4 may be a polygonal shape, for example, a hexagon, a pentagon, a triangle, or a Rhombic shape.

The magnet 130 includes four magnet units, but in another embodiment, the magnet may include two magnet units, and the two magnet units are arranged in two corner portions located on opposite sides of the housing 140.

Next, the position sensor 170, the circuit board 190, and the capacitor 175 will be described.

The circuit board 190 may be disposed on or coupled to the housing 140. For example, the circuit board 190 may be disposed on one side portion 141-1 of the housing 140. For example, the circuit board 190 may be disposed on or coupled to the mounting groove 21A of the housing 140.

For example, the circuit board 190 may be disposed between one side portion 141-1 of the housing 140 and one side plate 302A of the cover member 300. For example, the circuit board 190 may be disposed on the outer surface of the first side portion 141-1 of the housing 140.

For example, the circuit board 190 may be disposed between the first corner portion 142-1 and the second corner portion 142-2 of the housing 140.

The circuit board 190 may be conductively connected to the coil 120. The circuit board 190 may be conductively connected to the position sensor 170. The circuit board 190 may be conductively connected to at least one of the upper elastic member 150 or the lower elastic member 160.

For example, the circuit board 190 may be conductively connected to the first and second lower springs 160A and 160B. For example, referring to FIGS. 1 and 2, the circuit board 190 includes a first pad 6A conductively connected to the first lower spring 160A by conductive adhesive or solder and a second pad 6B conductively connected to the second lower spring 160B by conductive adhesive or solder. Additionally, the circuit board 190 may include a third pad 6C conductively connected to the cover member 300 by conductive adhesive or solder.

For example, the circuit board 190 may include a first surface that faces the inner surface of the side plate 302 of the cover member 300 and a second surface that is opposite to the first surface of the circuit board 190. For example, the first to third pads 6A to 6C may be disposed on the first surface of the circuit board 190. In another embodiment, the first and second pads 6A and 6B may be disposed on the second surface of the circuit board 190.

For example, the side plate 302 of the cover member 300 has a first groove 3A (or first opening) for exposing the first pad 6A of the circuit board 190 and a second groove 3B (or a second opening) for exposing the second pad 6B of the circuit board 190. For example, each of the first and second grooves 3A and 3B may be formed at a lower surface of the side plate 302 of the cover member 300.

The circuit board 190 may include a terminal portion 195 including at least one terminal P1 to P7. For example, at least one terminal P1 to P7 may be disposed on the first side of the circuit board 190. For example, the circuit board 190 may include a plurality of terminals P1 to P7.

For example, the circuit board 190 may include first to fourth terminals P1 to P4 conductively connected to the position sensor 170.

Also, for example, the circuit board 190 may include a fifth terminal P5 conductively connected to the third pad 6C. Also, for example, the circuit board 190 may include at least one test terminal P6, P7 (or an additional terminal).

For example, the terminals P1 to P7 of the circuit board 190 may be positioned lower than the side plate 302 of the cover member 300. For example, the terminals P1 to P7 of the circuit board 190 may be exposed from the side plate 302 of the cover member 300.

The circuit board 190 includes seven terminals P1 to P7 for electrical connection with the outside (e.g., terminals of the circuit board 800 of the camera device 200), but is not limited thereto and may include four terminals or more than eight terminals in other embodiments.

The circuit board 190 may include a circuit pattern or wirings for conductively connecting the position sensor 170 and the terminals P1 to P4. Additionally, the circuit board 190 may include circuit patterns or wirings for conductively connecting the third pad 6C and the fifth terminal. Additionally, the circuit board 190 may include circuit patterns or wiring for conductively connecting the position sensor 170 and the first and second pads 6A and 6B.

For example, the circuit board 190 may be a printed circuit board or a flexible printed circuit board.

The position sensor 170 may be disposed on housing 140. For example, the position sensor 170 may be disposed or mounted on the circuit board 190. For example, the position sensor 170 may be conductively connected to the circuit board 190.

For example, the position sensor 170 may be mounted or disposed on the second side of the circuit board 190, and at least a portion of the position sensor 170 is disposed within the opening 23 of the housing 140 formed on the first side portion 141-1 of the housing 140.

At the initial position of the bobbin 110, at least a portion of the position sensor 170 may overlap the sensing magnet 180 in a direction parallel to a straight line perpendicular to the optical axis and passing through the optical axis. In another embodiment, the sensing magnet 180 may not overlap the position sensor in a direction parallel to a straight line perpendicular to the optical axis and passing through the optical axis at the initial position of the bobbin 110.

At the initial position of the bobbin 110, the position sensor 170 may not overlap the coil 120 parallel to a straight line perpendicular to the optical axis and passing through the optical axis. In another embodiment, at the initial position of the bobbin 110, the position sensor 170 may partially overlap the coil 120 in a direction parallel to a straight line perpendicular to the optical axis and passing through the optical axis.

The position sensor 170 can detect the strength of the magnetic field of the sensing magnet 180 mounted on the bobbin 110 according to the movement of the bobbin 110, and output an output signal (e.g., output voltage) according to the detected result. The position sensor 170 may detect the position (or displacement) of the bobbin 110 or the position (or displacement) of the sensing magnet 180 in the optical axis direction.

For example, the position sensor 170 may be a driver including a Hall sensor. In another embodiment, the position sensor may be implemented as the hall sensor alone.

Fig. 7A is a block diagram illustrating an embodiment of the position sensor 170, the circuit board 190, and the capacitor 175. In FIG. 7A, the positional relationship between the position sensor 170 and the capacitor 175 is an example shown for ease of explanation.

The position sensor 170 in FIG. 7A may include a Hall sensor 61 and a driver 62. For example, the Hall sensor 61 may be made of silicon-based material, and the output VH of the Hall sensor 61 may increase as the ambient temperature increases. In an example, the ambient temperature may be the temperature of the lens moving apparatus, for example, the temperature of the circuit board 190, the temperature of the Hall sensor 61, or the temperature of the driver 62.

Additionally, in another embodiment, the Hall sensor 61 may be made of GaAs, and the output VH of the Hall sensor 61 may have a slope of about -0.06%/°C with respect to the ambient temperature.

The position sensor 170 may further include a temperature sensing element 63 capable of detecting the ambient temperature. The temperature sensing element 63 may output a temperature sensing signal Ts corresponding to the result of detection of the ambient temperature of the position sensor 170 to the driver 62.

For example, the Hall sensor 61 of the position sensor 170 may generate the output VH corresponding to the result of detection of the intensity of the magnetic force of the sensing magnet 180. For example, VH may be in the form of voltage, but is not limited thereto, and may be in the form of current in other embodiments. VH may be a digital signal, but is not limited thereto, and may also be an analog signal.

The driver 62 may output a driving signal dV for driving the Hall sensor 61 and a driving signal Id1 for driving the coil 120.

For example, using data communication using a protocol, for example, I2C communication, the driver 62 may receive a clock signal SCL, a data signal SDA, and power signals VDD and GND from the controller 830 or 780.

The driver 62 may generate the driving signal dV for driving the Hall sensor 61 and the driving signal Id1 for driving the coil 120 using the clock signal SCL and the data signal SDA. For example, the driving signal dV may be an analog signal or a digital signal and may be in the form of a current or voltage. For example, the driving signal Id1 may be in the form of current or voltage.

For example, the position sensor 170 includes first and second terminals (or pads) 9-1, 9-2 for receiving power or power signals VDD, GND, and third and fourth terminals (or pads) 9-3 and 9-4 for transmitting and receiving the clock signal SCL and the data signal SDA. Also, for example, the position sensor 170 may include two terminals, which are fifth and sixth terminals (or pads) 9-5 and 9-6 for providing the driving signal Id1 to the coil 120.

Also, for example, the circuit board 190 includes a first terminal P1 conductively connected to the first terminal 9-1 of the position sensor 170, a second terminal P2 conductively connected to the second terminal 9-2 of the position sensor 170, a third terminal P3 conductively connected to the third terminal 9-3 of the position sensor 170, and a fourth terminal P4 conductively connected to the fourth terminal 9-4 of the position sensor 170.

For example, the first pad 6A of the circuit board 190 may be conductively connected to the fifth terminal 9-5 of the position sensor 170, and the second pad 6B may be conductively connected to the sixth terminal 9-6 of the position sensor 170. The fifth and sixth terminals 9-5 and 9-6 of the position sensor 170 may be conductively connected to the first and second lower springs 160A and 160B. Additionally, the fifth and sixth terminals 9-5 and 9-6 of the position sensor 170 may be conductively connected to the coil 120.

The driver 62 can receive the output VH of the Hall sensor 61, and can transmit the clock signal SCL and the data signal SDA related the output VH of the Hall sensor 61 by data communication using a protocol, for example, I2C communication to the controller 830 and 780 through the terminals P3 and P4 of the circuit board 190.

In addition, the driver 62 can receive the temperature detection signal Ts measured by the temperature sensing element 63, and transmit the temperature detection signal Ts to the controller 830 and 780 by data communication using a protocol, for example, I2C communication through the terminals P3 and P4 of the circuit board 190. For example, the controller 830 and 780 may perform temperature compensation for the output VH of the Hall sensor 61 based on the change in ambient temperature measured by the temperature sensing element 63 of the position sensor 170.

The capacitor 175 may be disposed on the housing 140. For example, the capacitor 175 may be disposed on the first side portion 141-1 of the housing 140. At least a portion of the capacitor 175 may be disposed within the opening 23 of the housing 140.

The capacitor 175 may be disposed or mounted on the circuit board 190. For example, the capacitor 175 may be disposed on the second surface of the circuit board 190. The capacitor 175 may be in the form of a chip, and the capacitor 175 has a first terminal 195a conductively connected to one end of the capacitor 175 and a second terminal 195b conductively connected to the other end of the capacitor 175. The capacitor 175 may also be alternatively expressed as a "capacitive element" or a condenser.

In another embodiment, the capacitor 175 may be implemented to be included in the circuit board 190. For example, the circuit board 190 may include a capacitor including a first conductive layer, a second conductive layer, and an insulating layer (eg, dielectric layer) disposed between the first conductive layer and the second conductive layer.

For example, the capacitor 175 may be conductively connected in parallel to the first and second terminals P1 and P2 of the circuit board 190 to provide power (or a driving signal) to the position sensor 170 from the outside. Or, for example, the capacitor 175 may be conductively connected in parallel to the first and second terminals 9-1 and 9-2 of the position sensor 170.

For example, one end (or first terminal 195a) of the capacitor 175 may be conductively connected to the first terminal P1 of the circuit board 190, and the other end (or second terminal 195b) of the capacitor 175 may be conductively connected to the second terminal P2 of the circuit board 190. 190.

The capacitor 175 is conductively connected in parallel to the first and second terminals P1 and P2 of the circuit board 190, so that High-frequency noise included in the power and the driving signal(e.g., current) supplied to the driver 62 from the outside can be removed. For example, the capacitor 175 may serve as a smoothing circuit for removing ripple components or high-frequency components included in the power or the driving signal (eg, current) supplied to the driver 62 from the outside. Due to the capacitor 175, a stable and constant driving signal (or current) can be supplied to the driver 62 of the position sensor 170.

Fig. 7B is a block diagram illustrating another embodiment of the position sensor 170a and the circuit board 190a according to another embodiment.

Referring to FIG. 7B, the position sensor 170a can be implemented as a Hall sensor alone, and include two input terminals IN1 and IN2 for providing power or a driving signal and two output terminals OUT1 and OUT2 for outputting an output signal.

The circuit board 190a may include first and second terminals 19-11 and 19-21 to which a power or a driving signal for driving the position sensor 170a is supplied. The first terminal 19-11 of the circuit board 190a may be conductively connected to the first input terminal IN1 of the position sensor 170a, and the second terminal 19-21 of the circuit board 190a may be conductively connected to the second input terminal IN2 of the position sensor 170a.

In addition, the circuit board 190 is conductively connected to a third terminal 19-31 conductively connected to the first output terminal OUT1 of the position sensor 170a and a fourth terminal (19-41) conductively connected to the second output terminal OUT2 of the position sensor 170a.

Additionally, the circuit board 190a includes fifth and sixth terminals 19-51 and 19-61 to which power or a driving signal for driving the coil 120 is supplied from an external device (e.g., the controller 830). The fifth terminal 19-51 of the circuit board 190a may be conductively connected to the first pad 6A of the circuit board 190a, and the sixth terminal 19-61 of the circuit board 190a may be conductively connected to the second pad 6B of the circuit board 190a. For example, the fifth and sixth terminals 19-51 and 19-61 of the circuit board 190a may be conductively connected to the coil 120 through the lower springs 160A and 160B.

For example, the capacitor 175 may be conductively connected in parallel to the two input terminals IN1 and IN2 of the position sensor 170a. Or, for example, the capacitor 175 is conductively connected to the fifth and sixth terminals 19-51 and 19-61 of the circuit board 190, which are conductively connected in parallel to the input terminals IN1 and IN2 of the position sensor 170a.

In another embodiment, the sensing magnet may be disposed on the housing, and the position sensor may be disposed on the bobbin 110. Additionally, in another embodiment, the circuit board 190 may be disposed on the bobbin 110.

Next, the upper elastic member 150 and the lower elastic member 160 will be described.

FIG. 8A is a plan view of the upper elastic member 150, FIG. 8B is a plan view of the lower elastic member 160, and FIG. 9 is a perspective view of the circuit board 190, the position sensor 170, the capacitor 175, the first and second lower springs 160A and 160B and the base 210, FIG. 10 is a bottom view of the lens driving device 100 without the base 210, and FIG. 11 is a cross-sectional view of the lens driving device taken along line AB in FIG. 3, FIG. 12 is a cross-sectional view of the lens driving device 100 taken along line CD in FIG. 3, and FIG. 13 is a cross-sectional view of the lens driving device 100 taken along line EF in FIG. 3.

Referring to FIGS. 8A to 13, the upper elastic member 150 may be coupled to the bobbin 110 and the housing 140. The lower elastic member 150 may be coupled to the bobbin 110 and the housing 140. For example, at least one of the upper elastic member 150 and the lower elastic member 160 may support the bobbin 110 with respect to the housing 140.

For example, the upper elastic member 150 may be coupled to an upper portion, an upper surface, or an upper end of the bobbin 110 and an upper portion, an upper surface, or an upper end of the housing 140, and the lower elastic member 160 may be coupled to a lower portion, a lower surface, or a lower end of the bobbin 110 and a lower portion, a lower surface, or a lower end of the housing 140.

For example, at least one of the upper elastic member 150 or the lower elastic member 160 may be divided or separated into two or more pieces. For example, the lower elastic member 160 may include a first lower spring 160A and a second lower spring 160B that are spaced apart from each other.

The upper elastic member 150 and the lower elastic member 160 may be implemented as leaf springs, but are not limited thereto, and may also be implemented as coil springs, suspension wires, etc.

In Fig. 8A, the upper elastic member 150 includes a single upper spring that is not separated from each other, but is not limited thereto. In another embodiment, the upper elastic member may include a plurality of upper springs, and the plurality of upper springs may be conductively connected to the coil 120.

The upper elastic member 150 includes a first inner frame 151 coupled to the upper portion, the upper surface, or the upper end of the bobbin 110, a first outer frame 152 coupled to the upper portion, the upper surface, or the upper end of the housing 140, and a first connection portion 153 connecting the first inner frame 151 and the first outer frame 152. Here, "inner frame" can be expressed as "inner portion", and "outer frame" can be expressed as "outer portion".

For example, the upper elastic member 150 may include four first connection portions 153, and at least a portion of each of the four first connection portions is disposed at a corresponding one of the first to fourth corner portions 142-1 to 142-4 of the housing 140.

The first inner frame 151 of the upper elastic member 150 may include a groove 151a(or a hole) coupled to the first coupling portion 113 of the bobbin 110, and the first outer frame 152 may include a hole 152a(or a groove) coupled to the first coupling portion 144 of the housing 140.

An escape groove 154 for avoiding spatial interference with a stopper 143 of the housing 140 may be provided at the corner portion of the first outer frame 152 of the upper elastic member 150.

The first and second lower springs 160A and 160B may be coupled to the bobbin 110. Alternatively, the first and second lower springs 160A and 160B may be coupled with the bobbin 110 and the housing 140. The first and second lower springs 160A and 160B may be disposed between the bobbin 110 (or housing 140) and the base 210.

At least one of the first and second lower springs 160A and 160B may include a second inner frame 161 coupled to the lower portion, the lower surface, or the lower end of the bobbin 110, a second outer frame 162 coupled to the lower portion, the lower surface, or the lower end of the housing 140, and a second connection portion 163 connecting the second inner frame 161 and the second outer frame 162.

For example, an escape groove 166 may be formed in the second outer frame 162 to avoid spatial interference with the protrusion 216 of the base 210.

In addition, a hole 161a for coupling to the second coupling portion 117 of the bobbin 110 is provided in the second inner frame 161 of at least one of the first and second lower springs 160A and 160B.

A hole 162a for coupling to the second coupling portion 147 of the housing 140 is provided in the second outer frame 162 of at least one of the first and second lower springs 160A and 160B.

For example, one end of the coil 120 is coupled or conductively connected to a portion 7A (or first bonding portion) of the second inner frame 161-1 of the first lower spring 160A by soldering or a conductive member. The other end of the coil 120 may be coupled or conductively connected to a portion 7B (second bonding portion) of the second inner frame 162 of the second lower spring 160B by soldering or a conductive member. For example, an insertion groove for guiding the coil 120 may be formed at the bonding portions 7A and 7B of the first and second lower springs 160A and 160B.

For example, one end or an end portion of the second outer frame 162 of the first lower spring 160A may be conductively connected to the first pad 6A of the circuit board 190 by using conductive adhesive or solder. For example, one end or an end portion of the second outer frame 162 of the second lower spring 160B may be conductively connected to the second pad 6B of the circuit board 190 by using conductive adhesive or solder.

For example, the coil 120 may be conductively connected to the first and second pads 6A and 6B of the circuit board 190 through the first and second lower springs 160A and 160B.

For example, the driving signal may be provided to the coil 120 through the first and second pads 6A and 6B of the circuit board 190 and the first and second lower springs 160A and 160B.

Each of the first connection portion 153 of the upper elastic member 150 and the second connection portion 163 of the lower elastic member 160 is bent or curved (or curved) at least once to form a pattern of a certain shape. The bobbin 110 may be elastically or flexibly supported in an upward and/or downward motion in the first direction through a change in position and slight deformation of the first and second connection portions 153 and 163.

For example, each of the upper elastic member 50 and the lower elastic member 160 may be formed of a conductive material.

In order to absorb and buffer a vibration of the bobbin 110, the lens driving device 100 may further include a damper (not shown) disposed between the upper elastic member 150 and the housing 140.

For example, a damper (not shown) may be disposed in a space between the first connection portion 153 of the upper elastic member 150 and the bobbin 110 (or/and the housing 140).

Also, for example, the lens driving device 100 includes a damper (not shown) disposed between the second connection portion 163 of each of the first and second lower springs 160A and 160B and the bobbin 110 (or/and the housing 140).

Referring to FIG. 10, for example, the second connection portion 163 of the lower springs 160A and 160B may include a protrusion 163A. The protrusion 163A may be spaced apart from the second inner frame 161. The protrusion 163A may be spaced apart from the second outer frame 162. The protrusion 163A may be spaced apart from the first end of the second connection portion 163 connected to the second inner frame 161. The protrusion 163A may be spaced apart from the second end of the second connection portion 163 connected to the second outer frame 162. The protrusion 163A may include a hole.

For example, the lens driving device 100 may include a damper DA disposed between the bobbin 110 and the protrusion 163A of the second connection portion 163. For example, the damper DA may be coupled or attached to the protrusion 163A of the second connection portion 163 and the bobbin 110. For example, the damper DA may be disposed between the protrusion 163A of the second connection portion 163 and the protrusion 115 of the bobbin 110, and contact or attach each of the protrusion 163A of the second connection portion 163 and the protrusion 115 of the bobbin 110.

Additionally, for example, a damper (not shown) may be further disposed between the inner surface of the housing 140 and the outer surface of the bobbin 110.

Next, the base 210 will be described.

Referring to FIG. 9, the base 210 may include an opening 210A corresponding to the opening 101 of the bobbin 110 and/or the opening 401 of the housing 140. The base 210 may have a shape that matches or corresponds to the cover member 300, for example, a square shape.

The base 210 may include a step 212 on which adhesive can be applied when the base is fixed to the cover member 300 by adhesive. The step 212 may be formed at the outer side surface of the base 210. For example, the step 212 may be positioned at a lower portion or a lower end of the outer side surface of the base 210. At this time, the step 212 may guide the side plate 302 of the cover member 300, which is coupled to the upper side of the base, and may face the lower end of the side plate 302 of the cover member 300. An adhesive member or/and a sealing member may be disposed or applied between the lower end of the side plate 302 of the cover member 300 and the step 211 of the base 210, and the lower end of the side plate 302 of the cover member 300 and the step 212 of the base 210 may be coupled to each other. At least one groove 217 for injecting an adhesive member or a silicone member may be formed in the step 212 of the base 210.

The base 210 may be disposed under the bobbin 110 or the housing 140. For example, the base 210 may be disposed under the lower elastic member 160.

The base 210 may include the protrusion 216 protruding from the upper surface thereof. The protrusion 216 may be disposed at a corner of the upper surface of the base 210. The protrusion 216 may have a polygonal post shape, but is not limited thereto. The protrusion 216 may also be expressed as a post instead.

The protrusion 216 may be inserted into the groove 148 of the housing 140 and may be coupled to the groove 148 of the housing 140 by an adhesive member (not shown) such as epoxy or silicon.

In order to prevent the lower portion or the lower surface of the bobbin 210 from directly colliding with the upper surface of the base 210 when an external shock occurs, the base 210 may include a stopper 23 protruding from the upper surface of the base 210. For example, the stopper 23 of the base 210 may be arranged to correspond to, face, or overlap the stopper 116 of the bobbin 110 in the optical axis direction.

The stopper 23 of the base 210 can avoid spatial interference with the lower elastic member 160, and the upper surface of the stopper 23 is positioned higher than the second connection portion 163 of the lower springs 160A and 160B.

A portion of the circuit board 190, for example, the lower portion or the lower end of the circuit board 190, may be disposed on the outer side surface of the base 210. For example, the terminal portion 195 may be formed on a part of the circuit board 190 disposed on the outer side surface of the base 210.

For example, a seating groove (not shown) for seating or disposing a portion of the circuit board 190 may be formed on the outer side surface of the base 210, and the portion of the circuit board 190 is disposed in the seating groove of the base 210.

Additionally, the base 210 has grooves 22 to prevent spatial interference with the bonding portions 62a and 62b of the first and second lower springs 160a and 160b disposed on the base 210 and to facilitate soldering. The grooves 22 of the base 210 may be recessed from the upper surface of the base 210 and may be connected to the seating groove 210a, but is not limited thereto, and the grooves may not be connected to the seating groove.

Next, the cover member 300 will be described.

The cover member 300 may form an accommodation space together with the base 210, and the housing 140, the bobbin 110, and the components disposed on the housing 140 and the bobbin 110 are accommodated in the accommodation space.

For example, the cover member 300 may have a box shape having an open lower portion and include the upper plate 301 and the side plate 302.

The lower end of the side plate 302 of the cover member 300 may be coupled to the base 210.

The shape of the upper plate 302 of the cover member 300 may be circular or polygonal, for example, square or octagonal. The upper plate 302 of the cover member 300 may include an opening 303 for exposing a lens (not shown) to external light. The opening 303 may be a through hole that penetrates the upper plate 302 of the cover member 300 in the optical axis direction.

The material of the cover member 300 may be a magnetic body that sticks to the magnet 130. For example, the material of the cover member 300 may be a metal magnetic body. The cover member 300 may include a magnetic material and may function as a yoke.

The cover member 300 may include a protrusion 304 that protrudes downward from the upper plate 301. For example, the cover member 300 may include a plurality of protrusions that correspond to or face the magnet units 130-1 to 130-4.

The protrusion 304 may be formed adjacent to the opening 303 of the cover member 300. The protrusion 304 may be disposed inside the corresponding magnet unit. For example, the protrusion 304 among the protrusion 304 and the corresponding magnet unit may be positioned closer to the optical axis. For example, at least a portion of the protrusion 302 may overlap the corresponding magnet unit in a direction parallel to a straight line perpendicular to the optical axis and passing through the optical axis. In other embodiments, the protrusion of the cover member 300 and the corresponding magnet unit may not overlap with each other.

The protrusion 304 can concentrate the magnetic flux or magnetic field of the magnet unit toward the coil 120 and increase the electromagnetic force between the coil and the magnet unit. For example, the protrusion 304 may perform a yoke function to improve electromagnetic force.

The side plate 302 of the cover member 300 may include first to fourth side plates 302A to 302D corresponding to the first to fourth side portions 141-1 to 141-4 of the housing 140.

FIG. 14A is a flipped perspective view of the cover member 300, the housing 140, and the magnet 130, and FIG. 14B is a plan view of the cover member 300, the housing 140, and the magnet 130 of FIG. 14A, FIG. 15A is a perspective view of the cover member 300, the magnet 130, the sensing magnet 180, and the balancing member 185, and FIG. 15B shows a positional relationship between the cover member 300 and the first and second magnet units 130-1, 130-2, and the sensing magnet 180. In FIGs.14A and 14B, the arrangement relationship between the first magnet unit 130-1 and the side plates 302A and 302D of the cover member 300 may be applied or inferred to the arrangement between the second to fourth magnet units 130-2 to 130-4 and the side plates 302A to 302D of the cover member 300.

Referring to FIGs.14A, 14B, 15A, and 15B, the magnet 130 may be disposed between the posts 42A to 42D of the housing 140 and the protrusion 304 of the cover member 300.

The posts 42A to 42D of the housing 140 may be disposed between the corners CA1 to CA4 of the cover member 300 and the magnet units 130-1 to 130-4. The corners CA1 to CA4 of the cover member 300 may be a portion where two neighboring side plates of the cover member 300 meet.

For example, the magnet units 130-1 to 130-4 may be disposed inside the posts 42A to 42D of the housing 140. In another embodiment, the positions of the magnet units 130-1 to 130-4 and the positions of the posts 42A to 42D of the housing 140 may be reversed. For example, in another embodiment, the post of the housing 140 may be disposed inside the magnet unit.

The first surface 11A of the magnet 130 may face the protrusion 304 of the cover member 300, and the second face 11B of the magnet 13 may face the posts 42A to 42D.

At least a portion of the magnet 130 may be open or exposed from the outer side surface of the housing 140, and at least the exposed portion of the magnet 130 may be in contact with the inner surface of the side plate 302 of the cover member 300.

For example, the first portion 12A of the magnet 130 (see FIG. 5D) may be open or exposed from the first opening 33A of the housing 140, and the second portion 12B of the magnet 130 (see FIG. 5D) may be open or exposed from the second opening 33A of the housing 140.

For example, at least a portion of the first portion 12A of the magnet 130 may be in contact with the inner surface of the side plate 302 of the cover member 300, and at least a portion of the second portion 12B of the magnet 130 may be in contact with the inner surface of the side plate 302 of the cover member 300.

For example, at least a portion of the first portion 12A of the magnet unit (e.g., 130-1) may be in contact with the inner surface of the first side plate 302A of the cover member 300 adjacent to the first portion 12A, and at least a portion of the second portion 12B of the magnet unit (eg, 130-1) may be in contact with the inner surface of the fourth side plate 302D of the cover member 300 adjacent to the second portion 12B.

Referring to FIG. 14B, the first to fourth magnet units 130-1 to 130-4 may be in contact with the inner surfaces of the first to fourth side plates 302A to 302D of the cover member 300. Two contact regions can be formed between one magnet unit and the two side plates of the cover member 300, and in FIG. 14b, eight contact regions S1 to S8 may be formed between the magnet 130 and the side plates 302 of the cover member 300.

For example, one end of the second portion R2 (see FIG. 6) of the magnet unit (e.g., 130-1) exposed from the first opening 33A of the housing 140 may be in contact with the first side plate 302A (e.g., inner surface of the side plate 302A) of the cover member 300, and the other end of the second portion R2 (see FIG. 6) of the magnet unit (e.g., 130-1) exposed from the second opening 33B of the housing 140 may be in contact with the fourth side plate 302D (e.g., inner surface of the fourth side plate 302D) of the cover member 300.

For example, at least a portion of the third side surface 11C of the magnet unit (e.g., 130-1) shown in FIG. 6 may be in contact with the first side plate 302A of the cover member 300, and at least a portion of the fourth side surface 11D of the magnet (e.g., 130-1) may be in contact with the fourth side plate 302D of the cover member 300.

For example, the first surface B1 of the third side 11C of the magnet unit (e.g., 130-1) may be in contact with the inner surface of the first side plate 302A of the cover member 300, and the fourth surface B4 of the fourth side 11D of the magnet unit (e.g., 130-1) may be in contact with the inner surface of the fourth side plate 302D of the cover member 300.

The polarity of the portion of the magnet 130 that is in contact with the side plate 302 of the cover member 300 may be any one of N pole and S pole.

For example, in FIG. 14B , portions of the magnet units 130-1 to 130-4 that contact the side plates 302A to 302D of the cover member 300 may have the same polarity. Since the cover member 300 has a yoke function, in case that portions of the magnet units with different polarities (e.g., 130-1) contact the side plate 302 of the cover member 300, the magnetic fields may be offset each other so that the yoke function may be reduced, and as a result, the effect of increasing electromagnetic force between the coil 120 and the magnet units 130-1 to 130-4 may be reduced.

Additionally, in another embodiment, a portion of the magnet unit (e.g., 130-1) in contact with the side plate 302 of the cover member 300 may include both the N pole and the S pole.

Additionally, in another embodiment, the magnet units 130-1 to 130-4 may be spaced apart from the side plate 302 of the cover member 300.

The cover member 300 may include a first opening 305A that corresponds to, faces, or overlaps the sensing magnet 180.

Additionally, the cover member 300 may include a second opening 305B that corresponds to, faces, or overlaps the balancing member 185. For example, the first opening 305A and the second opening 305B may be formed in the side plate 302 of the cover member 300.

For example, the first opening 305A may be formed at the first side plate 302A of the cover member 300 corresponding to or facing the first side 141-1 of the housing 140, and the second opening 305B may be formed at the second side plate 302B of the cover member 305 corresponding to or facing the second side 141-2 of the housing 140.

For example, the first opening 305A may be formed in a part of the first side plate 302A of the cover member 300 corresponding to, facing, or overlapping a part of the first side portion 141-1 of the housing 140 between the first magnet unit 130-1 and the second magnet unit 130-2.

Also, for example, the second opening 305B is formed in a part of the second side plate 302B of the cover member 300 corresponding to, facing, or overlapping a part of the second side portion 142-2 of the housing 140 between the third magnet unit 130-3 and the fourth magnet unit 130-4.

For example, the first opening 305A may be open to the inner and outer surfaces of the first side plate 302A of the cover member 300. For example, the first opening 305A may be open to the lower surface of the first side plate 302A of the cover member 300. For example, the first opening 305A may extend to the lower surface of the first side plate 302A of the cover member 300. For example, the first opening 305A may be spaced apart from an edge where the first side plate 302A and the upper plate 301 of the cover member 300 meet. In another embodiment, the first opening 305A may extend to an edge where the first side plate 302A and the upper plate 301 of the cover member 300 meet. In another embodiment, the first opening 305A may be in the form of a through hole, hollow, or window penetrating the first side plate 302A of the cover member 300.

For example, the second opening 305B may be open to the inner and outer surfaces of the second side plate 302B of the cover member 300. For example, the second opening 305B may be open to the lower surface of the second side plate 302B of the cover member 300. For example, the second opening 305B may extend to the lower surface of the second side plate 302B of the cover member 300. For example, the second opening 305B may be spaced apart from an edge where the second side plate 302B and the upper plate 301 of the cover member 300 meet. In another embodiment, the second opening 305B may extend to an edge where the second side plate 302B and the upper plate 301 of the cover member 300 meet. In another embodiment, the second opening 305B may be in the form of a through hole, hollow, or window penetrating the second side plate 302B of the cover member 300.

For example, the shape of the first opening 305A and the shape of the second opening 305B may be the same. In another embodiment, the shape of the first opening 305A and the shape of the second opening 305B may be different.

For example, the second opening 305B may be located on the opposite side of the first opening 305A with respect to the optical axis. Also, for example, the first opening 305A and the second opening 305B may be arranged to be symmetrical to each other with respect to the optical axis.

For example, the first opening 305A and the second opening 305B may be overlapped with each other in a direction perpendicular to the optical axis OA and toward the second side plate 302B from the first side plate 302A.

Referring to FIGS. 5A and 15B, when the first side plate 302A of the cover member 300 is viewed from the front, the first opening 305A of the cover member 300 may be located between the first magnet unit 130-1 and the second magnet unit 130-2.

For example, an area of the first opening 305A may be larger than an area of the side surface (or the front surface) of the sensing magnet 180 when viewed from the front of the first side plate 302A of the cover member 300.

For example, when viewed in the optical axis direction, a cross direction length L1 of the first side plate 302A of the cover member 300 is equal to a cross direction length L2 of the third side plate 302A of the cover member 300. In other embodiments, L1 and L2 may be different.

For example, the cross direction length L1 of the first side plate 302A of the cover member 300 may be 12 [mm] to 18 [mm]. For example, L1 may be 14 [mm] to 16 [mm]. Or, for example, L1 may be 14.5 [mm] to 15.5 [mm].

For example, a lengthwise length M1 of the first side plate 302A of the cover member 300 may be 4 [mm] to 7 [mm]. Or, for example, M1 may be 4.5 [mm] to 6 [mm]. Or, for example, M1 may be 4.5 [mm] to 5.5 [mm].

For example, a thickness (T1, see FIG. 14A) of the cover member 300 may be 0.2 [mm] to 0.6 [mm]. Or, for example, the thickness T1 of the cover member 300 may be 0.3 [mm] to 0.5 [mm]. Or, for example, the thickness T1 of the cover member 300 may be 0.4 [mm] to 0.45 mm.

For example, L1 may be a length of the first side plate 302A in a direction parallel to the first side plate 302A, and L2 may be a length in a direction from the upper end of the first side plate 302A to the lower end of the first side plate 302A, and T1 may be a length or a thickness from the outer side surface of the first side plate 302A to the inner side surface of the first side plate 302A.

The description of the cross direction length and lengthwise length of the first side plate 402A may be applied to or inferred to the cross direction length and lengthwise length of each of the second to fourth side plates 402B to 42D of the cover member 300. Additionally, the description of the thickness T1 of the cover member 300 may be applied or inferred to the thickness of each of the first to fourth side plates 302A to 302D and the thickness of the protrusion 304 of the cover member 300.

For example, a cross direction length H1 of the magnet unit (e.g., 130-1) may be 2.4 [mm] to 8.4 [mm]. For example, H1 may be 4.4 [mm] to 6.4 [mm]. Or, for example, H1 may be 4.8 [mm] to 5.6 [mm] .

For example, the lengthwise length M2 of the magnet unit (e.g., 130-1) may be 1.2 [mm] to 3.2 [mm]. For example, M2 may be 1.4 [mm] to 2.8 [mm]. Or, for example, M2 may be 1.8 [mm] to 2.4 [mm] .

For example, the thickness T2 of the magnet unit (e.g., 130-1) may be 1 [mm] to 3 [mm]. Or, for example, T2 may be 1.4 [mm] to 2.6 [mm]. Or, for example, in order to increase the electromagnetic force by the interaction with the coil 120, the thickness T2 of the magnet unit (e.g., 130-1) may be 1.8 [mm] to 2.2 [mm] .

H1 may be applied or inferred to the cross direction length of other magnet units (e.g., 130-2 to 130-4), and M2 may be applied to the lengthwise length of other magnet units (e.g., 130-2 to 130-4), and T2 may be applied or inferred to the thickness of other magnet units (e.g., 130-2 to 130-4).

For example, H1 may be the maximum length of the magnet unit (e.g., 130-1) in a direction parallel to the first surface (11A) (or second surface (11B)) of the magnet unit (e.g., 130-1). For example, M2 may be the length of the magnet unit (e.g., 130-1) in a direction from the upper surface of the magnet unit (e.g., 130-1) toward the lower surface of the magnet unit (e.g., 130-1). For example, T2 is the length of the magnet unit (e.g., 130-1) in a direction from the first surface 11A of the magnet unit (e.g., 130-1) toward the second surface 11B or a distance between the surface 11A and the second surface 11B.

Referring to FIG. 2, for example, the thickness K1 of the coil 120 may be 0.3 [mm] to 1 [mm]. For example, the thickness K1 of the coil 120 may be 0.45 to 0.67. Or, for example, in order to increase electromagnetic force by an interaction with the magnet units 130-1 to 130-4, the thickness K1 of the coil 120 may be 0.5 to 0.6.

In particular, since the weight of the lens module mounted on the lens driving device of the camera device mounted on the vehicle is greater than the weight of the lens module mounted on a mobile device, for example, a mobile phone, when compared to the camera device on the mobile device, the camera device mounted on the vehicle requires a larger electromagnetic force to move the bobbin in the optical axis direction.

The embodiment may include magnet units 130-1 to 130-4 having a thickness greater than a thickness of the driving magnet of the lens driving device of the camera device mounted on the mobile device in order to increase the electromagnetic force for moving the bobbin on which the lens module is mounted in the optical axis direction as the weight of the lens module mounted on the lens driving device increases.

Additionally, the embodiment may include a coil 120 having a thickness greater than a thickness of the AF coil of the lens driving device of the camera device mounted on the mobile device in order to secure greater electromagnetic force.

For example, the cross direction length H2 of the sensing magnet 180 may be 0.3 [mm] to 1.1 [mm]. For example, H2 may be 0.5 [mm] to 0.9 [mm]. Or, for example, H2 may be 0.65 [mm] to 0.75 [mm]

For example, the lengthwise length M3 of the sensing magnet 180 may be 0.8 [mm] to 1.6 [mm]. For example, M3 may be 1 [mm] to 1.4 [mm]. For example, M3 may be 1.1 [mm] to 1.3 [mm] .

For example, the thickness T3 of the sensing magnet 180 may be 0.2 [mm] to 0.6 [mm]. For example, T3 may be 0.3 [mm] to 0.5 [mm]. For example, T3 may be 0.35 [mm] to 0.45 [mm] .

H2 may be applied or inferred to the cross direction length of the balancing member 185, M3 may be applied or inferred to the lengthwise length of the balancing member 185, and T3 is applied or inferred to the thickness of the balancing member 185.

For example, the cross direction length L3 of the first opening 305A may be 1.5 [mm] to 3.5 [mm]. For example, L3 may be 2 [mm] to 3 [mm]. For example, L3 may be 2.4 [mm] to 2.8 [mm] .

For example, the lengthwise length L4 of the first opening 305A may be 1.8 [mm] to 3.8 [mm]. For example, L4 may be 2 [mm] to 2.8 [mm]. For example, L4 may be 2.2 [mm] to 2.6 [mm] .

The separation distance D1 between the first magnet unit 130-1 and the second magnet unit 130-2 may be 3.5 [mm] to 8 [mm]. For example, D1 may be 4.5 [mm] to 6.5 [mm]. For example, D1 may be 5 [mm] to 6 [mm]. For example, D1 may be the distance from one end (e.g., B2 or B5) of the first magnet unit 130-1 to one end (e.g., B2 or B5) of the second magnet unit 130-2.

For example, the value D1/L3 obtained by dividing the separation distance D1 by the cross direction length L3 of the first opening 305A may be 1 to 5.3. When the divided value D1/L3 is less than 1, the first opening 305A and the magnet units 130-1 and 130-2 may be overlapped with each other, so that the yoke function may be weakened, and the electromagnetic force between the magnet units 130-1 and 130-2 and the coil 120 may be reduced. Additionally, when the divided value D1/L3 is greater than 5.3, the area of the first opening 305A nay become too small and the magnetic field interference between the magnet units 130-1 and 130-2 and the sensing magnet 180 may not be suppressed.

Or, for example, in order to prevent the electromagnetic force between the magnet units 130-1 and 130-2 and the coil 120 from being reduced and at the same time suppress the magnetic field interference between the magnet units 130-1 and 130-2 and the sensing magnet 180, the divided value (D1/L3) may be 2 to 4.

For example, the value L1/L3 obtained by dividing the cross direction length L1 of the first side plate 302A by the cross direction length L3 of the first opening 305A may be 4.2 to 10. If the divided value L1/L3 is less than 4.5, the size of the first opening 305A becomes too large, and the yoke function of the first side plate 302A is weakened, and the electromagnetic force between the magnet units 130-1 and 130-2 and the coil 120 may be reduced. On the other hand, when the divided value L1/L3 is greater than 10, the size of the first opening 305A becomes too small to suppress the magnetic field interference between the magnet units 130-1 and 130-2 and the sensing magnet 180.

For example, the electromagnetic force between the magnet units 130-1 and 130-2 and the coil 120 is not reduced, and at the same time, the magnetic field interference between the magnet units 130-1 and 130-2 and the sensing magnet 180 is suppressed. To enable this, the divided value L1/L3 may be 5 to 7.

For example, the value M1/L4 obtained by dividing the lengthwise length M1 of the first side plate 302A by the lengthwise length L4 of the first opening 305A may be 1.1 to 3.8. If the divided value M1/L4 is less than 1.1, the size of the first opening 305A becomes too large and the yoke function of the first side plate 302A is weakened so that the electromagnetic force between the magnet units 130-1 and 130-2 and the coil 20 may be reduced. On the other hand, when the divided value M1/L4 is greater than 3.8, the size of the first opening 305A becomes too small to suppress the magnetic field interference between the magnet units 130-1 and 130-2 and the sensing magnet 180.

For example, the electromagnetic force between the magnet units 130-1 and 130-2 and the coil 120 is not reduced, and at the same time, the magnetic field interference between the magnet units 130-1 and 130-2 and the sensing magnet 180 is suppressed. To enable this, the divided value M1/L4 may be 1.5 to 2.5.

For example, the value L3/H2 obtained by dividing the cross direction length L3 of the first opening 305A by the cross direction length H2 of the sensing magnet 180 may be 1.4 to 11. If the divided value L3/H2 is less than 1.4, the size of the first opening 305A may become too small to suppress the magnetic field interference between the magnet units 130-1 and 130-2 and the sensing magnet 180. On the other hand, when the divided value L3/H2 is greater than 11, the size of the first opening 305A becomes too large and the yoke function of the first side plate 302A is weakened so that the electromagnetic force between the magnet units 130-1 and 130-2 and the coil 120 may be reduced.

For example, in order to prevent the electromagnetic force between the magnet units 130-1 and 130-2 and the coil 120 from being reduced and at the same time suppress the magnetic field interference between the magnet units 130-1 and 130-2 and the sensing magnet 180, the divided value L3/H2 may be 3 to 5.

For example, the value L4/M3 obtained by dividing the lengthwise length L4 of the first opening 305A by the lengthwise length M3 of the sensing magnet 180 may be 1.125 to 4.75. If the divided value L4/M3 is less than 1.125, the size of the first opening 305A may become too small to suppress the magnetic field interference between the magnet units 130-1 and 130-2 and the sensing magnet 180. On the other hand, when the divided value L4/M3 exceeds 4.75, the size of the first opening 305A becomes too large and the yoke function of the first side plate 302A is weakened so that the electromagnetic force between the magnet units 130-1 and 130-2 and the coil 120 may be reduced.

For example, in order to prevent the electromagnetic force between the magnet units 130-1 and 130-2 and the coil 120 from being reduced and at the same time suppress the magnetic field interference between the magnet units 130-1 and 130-2 and the sensing magnet 180, the divided value L4/M3 may be 1.5 to 2.5.

The description of the relationship between the sensing magnet 180, the first opening 305A, the distance D1, the first side plate 302A, and the first and second magnet units 130-1 and 130-2 may be applied and inferred to the relationship between the balancing member 185, the second opening 302B, the distance between the second and fourth magnet units, the second side plate 302B, and the third and fourth magnet units 130-3 and 130-4.

The cover member 300 may be formed of a magnetic material and is disposed adjacent to or in contact with the magnet units 130-1 to 130-4, thereby the magnetic field generated from the magnet units 130-1 to 130-4 may be well transmitted to the sensing magnet 180 and the balancing member 185 through the cover member 300, and the effect of magnetic field interference may increase.

If the magnetic field interference between the magnet units 130-1 to 130-4 and the sensing magnet 180 increases, the degree of tilt of the AF moving unit with respect to the optical axis during AF operation may increase, thereby the reliability of auto focusing may be deteriorated.

Additionally, the electromagnetic force between the coil 120 and the magnet units 130-1 to 130-4 may be reduced due to the magnetic field interference between the magnet units 130-1 to 130-4 and the sensing magnet 180.

The first opening 305A prevents the magnetic field generated from the magnet units 130-1 and 130-2 from influencing the magnetic field of the sensing magnet 180 through the first side plate 302A of the cover member 300. In the embodiments, the magnetic field interference between the sensing magnet 180 and the magnet units 130-1 and 130-2 which are driving magnets can be reduced by the first opening 305A.

In the embodiment, AF driving reliability can be improved by suppressing tilt of the bobbin 110 during AF driving due to magnetic field interference. In addition, by suppressing magnetic field interference between the magnet units 130-1 to 130-4 and the sensing magnet 180 by the first opening, it is possible to prevent the electromagnetic force between the coil 120 and the magnet units 130-1 to 130-4 due to magnetic field interference from being reduced.

In the embodiment, as the magnetic field interference is suppressed as described above, deterioration of demagnetization characteristics of the magnet units 130-1 to 130-4 can be prevented even if there is a sudden change in temperature or humidity of the surrounding environment.

FIG. 16 shows a magnetic fields generated from each of the magnet units 130-1 to 140-4, the sensing magnet 180, and the balancing member 185 disposed inside the cover member 300.

The first dotted line 28A shown in FIG. 16 may be an area of the first side plate 305A where the first opening 305A is formed, and as shown in the first dotted line 28A, the first opening 305A formed in the first side plate 302A of the cover member 300 prevents the magnetic field of the first magnet unit 130-1 and the magnetic field of the second magnet unit 130-2 from expanding toward the sensing magnet 180.

As a comparative example, no opening is formed at a region (second dotted line 28B) of another side plate (e.g., 302C) of the cover member 300 located between the second magnet unit 130-2 and the third magnet unit 130-3.

When compared with the first dotted line 28A, in the second dotted line 28B, the magnetic field of the first magnet unit 130-1 and the magnetic field of the second magnet unit 130-2 can be extended to a central area of the third side plate 305C. That is, in the embodiment, the influence of the magnetic field of the first magnet unit 130-1 and the magnetic field of the second magnet unit 130-2 on the magnetic field of the sensing magnet 180 can be suppressed by the first opening 305A.

In addition, the magnetic field of the third magnet unit 130-3 and the magnetic field of the fourth magnet unit 130-4 can be suppressed from extending to the balancing member 185 by the second opening 305B, and the influence of the magnetic field of the third magnet unit 130-3 and the magnetic field of the fourth magnet unit 130-4 on the magnetic field of the balancing member 185 made of magnetic material can be suppressed.

In addition, in the embodiment the magnetic field interference between the sensing magnet 180, the balancing member 185, and the magnet units 130-1 to 130-4 can be reduced by the first opening 305A and the second opening 305B. Because of this, in the embodiment, tilt of the AF moving unit during AF driving due to magnetic field interference can be suppressed, and the reliability of AF driving can be improved, and AF driving force can be prevented from being reduced.

For example, the cross direction length L3 of the first opening 305A may be greater than the cross direction length H2 of the sensing magnet 180. In another embodiment, the cross direction length of the first opening 305A may be equal to or smaller than the cross direction length of the sensing magnet 180.

Also, for example, the lengthwise length L4 of the first opening 305A may be larger than the lengthwise length M3 of the sensing magnet 180. In another embodiment, the lengthwise length of the first opening 305A may be equal to or smaller than the lengthwise length of the sensing magnet 180.

For example, the cross direction length L3 of the first opening 305A may be smaller than the cross direction length L1 of the first side plate 302A, and the lengthwise length L4 of the first opening 305A may be smaller than the lengthwise length M1 of the first side plate 302A.

By making the size (or area) of the first opening 305A larger than the size (or area) of the sensing magnet 180, in the embodiment, the influence of the magnetic field of the magnet units 130-1 and 130-2 on the sensing magnet 180 can be suppressed or blocked.

When the first side plate 302A is viewed from the front, the sensing magnet 180 may be disposed inside the first opening 305A of the cover member 300. For example, when the first side plate 302A is viewed from the front, the upper surface of the sensing magnet 180 may be positioned lower than an upper end of the first opening 305A of the cover member 300. Additionally, when the first side plate 302A is viewed from the front, the sensing magnet 180 may overlap the first opening 305A of the cover member 300. For example, when the first side plate 302A is viewed from the front, the sensing magnet 180 may not overlap the first side plate 302A of the cover member 300. And by arranging the sensing magnet 180, in the embodiment the influence of the magnetic field of the magnet units 130-1 and 130-2 on the sensing magnet 180 can be suppressed or blocked.

In another embodiment, when the first side plate 302A is viewed from the front, a part of the sensing magnet 180 may overlap the first opening 305A of the cover member 300, and another part of the sensing magnet 180 may overlap the first side plate 302A of the cover member 300.

Additionally, when the first side plate 302A is viewed from the front, the first opening 305A may be located between the first magnet unit 130-1 and the third magnet unit 130-3.

For example, when the first side plate 302A is viewed from the front, the upper surface of the sensing magnet 180 may be positioned lower than the upper surface of the magnet units 130-1 and 130-2. In another embodiment, the upper surface of the sensing magnet 180 may be positioned higher than the upper surface of the magnet units 130-1 and 130-2 or may be located at the same height.

The lower surface of the sensing magnet 180 may be positioned lower than the lower surfaces of the magnet units 130-1 and 130-2. In another embodiment, the lower surface of the sensing magnet 180 may be higher than the lower surface of the magnet units 130-1 and 130-2 or may be located at the same height.

The separation distance D1 between the first magnet unit 130-1 and the second magnet unit 130-2 may be greater than the cross direction length L3 of the first opening 305A of the cover member 300. In another embodiment, the separation distance D1 between the first magnet unit 130-1 and the second magnet unit 130-2 is equal to the cross direction length L3 of the first opening 305A of the cover member 300.

When the first side plate 302A viewed from the front, each of the first magnet unit 130-1 and the second magnet unit 130-2 may not overlap the first opening 305A. Through this arrangement, the side plate 302A of the cover member 300 can prevent the magnetic field of the first and second magnet units 130-1 and 130-2 from leaking and concentrate the magnetic field of the first and second magnet units 130-1 and 130-2 on the coil 120. As a result, the electromagnetic force between the coil 120 and the first and second magnet units 130-1 and 130-2 can be increased.

In addition, the magnet units 130-1 to 130-4 may contact the inner surfaces of the side plates 302A to 203D of the cover member 300 and the magnetic fields of the magnet units 130-1 to 130-4 may be focused on the coil 120 through the side plates 302A to 203D of the cover member 300. For this reason, in the embodiment, the electromagnetic force between the magnet units 130-1 to 130-4 and the coil 120 can be improved.

The lens driving device 100 may include a first sealing member (not shown) (or a first adhesive) disposed in the first opening 305A of the cover member 300, and the first opening 305A may be sealed or closed by the first sealing member.

The lens driving device may include a second sealing member (or a second adhesive) disposed in the second opening 305B of the cover member 300, and the second opening 305B may be sealed or closed by the second sealing member.

Meanwhile, the lens driving device according to the above embodiments may be used in various fields, such as those of a camera device or an optical device.

For example, the lens driving device 100 according to the embodiments may be included in the optical device configured to form an image of an object in a space using reflection, refraction, absorption, interference, diffraction, etc., which are characteristics of light, to increase the visual power of the eyes, to record or reproduce an image formed by a lens, to perform optical measurement, or to propagate or transfer an image. For example, the optical device according to an embodiment may include a smartphone or a mobile terminal including the camera.

FIG. 17 is a separated perspective view of a camera device 200 according to an embodiment.

Referring to FIG. 17, the camera device 200 may include a lens module 400, the lens driving device 100, an adhesive member 612, a filter 610, a circuit board (800), an image sensor 810 and a connector 840.

The lens module 400 may include a lens and/or a lens barrel and be mounted on the bobbin 110 of the lens driving device 100.

In an example, the lens module may include one lens or more than one lenses and a lens barrel accommodating the lens. But the configuration of the lens module is not limited to the lens barrel, and any holder structure that can support one or more lenses may be available for the lens barrel. The lens module is coupled to the lens driving device 100 and can move together with the lens driving device 100.

For example, the lens module 400 may be screw-coupled with the lens driving device 100 as an example. As an example, the lens module 400 may be coupled to the lens driving device 100 using an adhesive (not shown). Meanwhile, light passing through the lens module 400 may pass through the filter 610 and be irradiated to the image sensor 810.

The adhesive member 612 may couple or adhere the base 210 of the lens driving device 100 to the circuit board 800. For example, the adhesive member 612 may be epoxy, a thermo-hardening adhesive, or an ultraviolet-hardening adhesive.

The filter 610 may serve to prevent a specific-frequency-band component of light passing through the lens barrel 400 from being incident on the image sensor 810. The filter 610 may be an infrared cutoff filter; however, the disclosure is not limited thereto. In this case, the filter 610 may be disposed parallel to the x-y plane.

At this time, the infrared cut-off filter may be formed of a film material or a glass material. As an example, the infrared cut-off filter may be formed by coating an infrared blocking coating material on a flat optical filter, such as a cover glass for protecting an imaging surface.

The filter 610 may be disposed below the base 210 of the lens driving device 100.

For example, the base 210 may include a seating portion (not shown) formed at a lower surface of the base 210 for seating the filter 610. In another embodiment, a sensor base (not shown) for seating or disposing the filter 610 may be provided separately from the base 210.

The circuit board 800 may be disposed under the lens driving device 100, and the image sensor 810 may be mounted on the circuit board 800. The image sensor 810 may receive an image included in light incident through the lens driving device 100 and convert the received image into an electrical signal. The circuit board 800 may include terminals for electrical connection to at least one of the terminals P1 to P7 of the circuit board 190 of the lens driving device 100 using solder or conductive adhesive.

The image sensor 810 may be positioned so that the optical axis of the image sensor 810 coincides with that of the lens module 400. Through this, the image sensor can acquire light passing through the lens module 400. The image sensor 810 can output the irradiated light as an image. In an example, the image sensor 810 may be a charge coupled device (CCD), a metal oxide semiconductor (MOS), a CPD, or a CID. However, the type of image sensor is not limited to this.

The filter 610 and the image sensor 810 may be arranged to be spaced apart from each other in the first direction.

The connector 840 is conductively connected to the circuit board 800 and may have a port for electrical connection to an external device.

FIG. 18a is a perspective view of the optical device 200A according to an embodiment, FIG. 18b is a perspective view of the optical device 200X according to another embodiment, and FIG. 19 is a configuration diagram of the optical device 200A shown in FIG. 18A and FIG. 18B.

For example, the camera device 200 according to the embodiment of FIG. 18A may be a front camera in which the lens module 400 is arranged to face a front surface of the body 850, and the camera device 200 according to the embodiment of FIG. 18B may be a rear camera arranged to face the rear surface of the body 850 of the optical device 200A. An optical device according in another embodiment may include both the front camera of FIG. 18A and the rear camera of FIG. 18B.

Referring to FIGs. 18a, 18b and 19, the optical device 200A (hereinafter referred to as a "terminal") may include a body 850, a wireless communication unit 710, an A/V input unit 720, a sensing unit 740, an input/output unit 750, a memory unit 760, an interface unit 770, a controller 780, and a power supply unit 790.

The body 850 shown in FIGs. 18A and 18B has a bar shape, however, the disclosure is not limited thereto. The body may have any of various structures, such as a slide type structure, a folder type structure, a swing type structure, and a swivel type structure, in which two or more sub-bodies are coupled so as to be movable relative to each other.

The body 850 may include a case (casing, housing, cover, etc.) that defines the external appearance thereof. For example, the body 850 may be divided into a front case 851 and a rear case 852. Various electronic parts of the terminal may be mounted in a space defined between the front case 851 and the rear case 852.

The wireless communication unit 710 may include one or more modules that enable wireless communication between the terminal 200A, 200X and a wireless communication system or between the terminal 200A, 200X and a network in which the terminal 200A, 200X is located. For example, the wireless communication unit 710 may include a broadcast receiving module 711, a mobile communication module 712, a wireless Internet module 713, a nearfield communication module 714, and a location information module 715.

The audio/video (A/V) input unit 720, which is configured to input an audio signal or a video signal, may include a camera 721 and a microphone 722.

The camera 721 may be the camera device 200 according to the embodiment

The sensing unit 740 may sense the current state of the terminal 200A, 200X, such as the opening and closing state of the terminal 200A, 200X, the position of the terminal 200A, 200X, whether a user contacts the terminal, the orientation of the terminal 200A, 200X, and acceleration/deceleration of the terminal 200A, 200X, in order to generate a sensing signal for controlling the operation of the terminal 200A, 200X. For example, when the terminal 200A, 200X is a slide phone, the sensing unit may sense whether the slide phone is open or closed. In addition, the sensing unit senses whether electric power is supplied from the power supply unit 790 and whether the interface unit 770 is coupled to an external instrument.

The input/output unit 750 is configured to generate input or output related to visual sensation, audible sensation, or tactile sensation. The input/output unit 750 may generate input data for controlling the operation of the terminal 200A, 200X, and may display information processed by the terminal 200A, 200X.

The input/output unit 750 may include a keypad unit 730, a display module 751, a sound output module 752, and a touchscreen panel 753. The keypad unit 730 may generate input data through keypad input.

The display module 751 may include a plurality of pixels, the color of which is changed according to an electrical signal. For example, the display module 751 may include at least one of a liquid crystal display, a thin film transistor-liquid crystal display, an organic light-emitting diode, a flexible display, and a three-dimensional (3D) display.

The sound output module 752 may output audio data received from the wireless communication unit 710 in a call signal reception mode, a telephone communication mode, a recording mode, a voice recognition mode, or a broadcast reception mode, or may output audio data stored in the memory unit 760.

The touchscreen panel 753 may convert a change in capacitance due to a user's touch on a specific region of the touchscreen into an electrical input signal.

The memory unit 760 may store a program for processing and control of the controller 780, and may temporarily store input/output data (for example, a telephone directory, messages, audio, still images, photographs, and video). For example, the memory unit 760 may store images, such as photographs or video, taken by the camera 721.

The interface unit 770 functions as a path for connection between the terminal 200A, 200X and an external instrument. The interface unit 770 may receive data or electric power from the external instrument and transmit the received data or electric power to internal components of the terminal 200A, 200X, or may transfer data in the terminal 200A, 200X to the external instrument. For example, the interface unit 770 may include a wired/wireless headset port, an external charger port, a wired/wireless data port, a memory card port, a port for connection with an apparatus having an identification module, an audio input/output (I/O) port, a video input/output (I/O) port, and an earphone port.

The controller 780 may control the overall operation of the terminal 200A, 200X. For example, the controller 780 may perform related control and processing for voice communication, data communication, and video communication.

The controller 780 may have a multimedia module 781 for multimedia reproduction. The multimedia module 781 may be implemented in the controller 180 or may be implemented separately from the controller 780.

The controller 780 may perform pattern recognition processing that is capable of recognizing writing input or drawing input performed on the touchscreen as text or an image, respectively.

The power supply unit 790 may supply power required to operate the respective components upon receiving external power or internal power under the control of the controller 780.

The features, structures, and effects described in the above embodiments are included in at least one embodiment, but are not limited only to one embodiment. Furthermore, features, structures, and effects illustrated in each embodiment may be combined or modified in other embodiments by those skilled in the art to which the embodiments pertain. Therefore, it is to be understood that such combinations and modifications fall within the scope of the present disclosure.

### [Industrial Applicability]

Embodiments may be used for a lens driving device, a camera device, and an optical device capable of improving electromagnetic force between a coil and a magnet unit and suppressing magnetic field interference between the sensing magnet and the magnet unit.

## Claims

1. A lens driving device comprising:
a cover member including an upper plate and a side plate;
a bobbin disposed in the cover member;
magnet units disposed in the cover member;
a coil disposed on the bobbin so as to face the magnet units;
a sensing magnet disposed on the bobbin; and
a position sensor disposed in the cover member so as to face the sensing magnet,
wherein each of the magnet units is disposed adjacent to a corresponding one of edges of the side plates, and
wherein the cover member comprises a first opening formed at the side plate and facing the sensing magnet.

2. The lens driving device according to claim 1, wherein the side plate comprises first to fourth side plates, wherein the first opening is formed at the first side plate facing the sensing magnet in a direction parallel to a straight line perpendicular to an optical axis and passing through the optical axis.

3. The lens driving device according to claim 1, wherein when the side plate at which the first opening is formed is viewed from a front, the first opening overlaps the sensing magnet.

4. The lens driving device according to claim 3, wherein when the first side plate at which the first opening is formed is viewed from a front, the first opening does not overlap the magnet units.

5. The lens driving device according to claim 1, comprising a housing disposed in the cover member, and wherein the magnet units are disposed at corner portions of the housing corresponding to the edges of the side plate.

6. The lens driving device according to claim 5, wherein each of the magnet units comprises a first portion exposed from the housing, and
wherein the first portion is in contact with the side plate.

7. The lens driving device according to claim 5, wherein each of the magnet units comprises a second portion exposed from the housing and contacting a portion of the side plate exposed from the housing.

8. The lens driving device according to claim 5, wherein the housing comprises a portion disposed between two neighboring magnet units among the magnet units and facing the side plate.

9. The lens driving device according to claim 1, comprising a balancing member disposed on the bobbin so as to be opposite to the sensing magnet with respect to an optical axis, and
wherein the side plate comprises a second opening facing the balancing member.

10. The lens driving device according to claim 9, wherein the second opening is disposed to be opposite to the first opening with respect to the optical axis.
